# EUROPÄISCHE PATENTSCHRIFT

(11) **EP 2 496 993 B1**
(45) Veröffentlichungstag und Bekanntmachung des Hinweises auf die Patenterteilung: **06.06.2018**
(21) Anmeldenummer: 10795600.5
(22) Anmeldetag: 02.11.2010
(51) Int. Cl.: G05B 19/05

(54) **VERFAHREN ZUR ABSICHERUNG VON END-USER PROGRAMMÄNDERUNGEN DURCH FORMALE KONTRAKTE UND PROGRAMMVERIFIKATION IN DER AUTOMATISIERUNGSTECHNIK**
METHOD FOR SECURING END-USER PROGRAM CHANGES BY MEANS OF FORMAL CONTRACTS AND PROGRAM VERIFICATION IN AUTOMATION TECHNOLOGY
PROCÉDÉ DE PROTECTION DE CHANGEMENTS DE PROGRAMME PAR L'UTILISATEUR FINAL PAR DES CONTRATS FORMELS ET VÉRIFICATION DE PROGRAMME DANS LA TECHNIQUE D'AUTOMATION

(30) Priorität: 03.11.2009 DE 102009051808
(43) Veröffentlichungstag der Anmeldung: 12.09.2012
(73) Patentinhaber: KEBA AG, 4041 Linz (AT)
(72) Erfinder: PRÄHOFER, Herbert, 4040 Linz (AT)
(74) Vertreter: Burger, Hannes
(86) Internationale Anmeldenummer: PCT/AT2010/000415
(87) Internationale Veröffentlichungsnummer: WO 2011/063439

(56) Entgegenhaltungen:
- EP-A1- 2 244 143
- DE-A1-102004 062 852

## Beschreibung

Die Erfindung betrifft ein Verfahren zur unmittelbaren und teilautomatischen Anwenderunterstützung bei der Erstellung, Abänderung und Prüfung eines Ablaufprogramms für eine zustandsbasierte Maschinensteuerung, ausgeführt auf einer integrierten Entwicklungsumgebung einer elektronischen Datenverarbeitungseinrichtung. Ferner betrifft die Erfindung eine Datenverarbeitungseinrichtung und eine Werkzeugmaschine.

Aus dem Stand der Technik sind Ablaufsteuerungen bekannt, die beispielsweise zum Betrieb einer Fertigungseinrichtung verwendet werden. Eine derartige Ablaufsteuerung umfasst zumindest ein Speichermittel zur Hinterlegung und ein Ausführungsmittel zur Abarbeitung von Ablaufanweisungen. Um einen größtmöglichen Flexibilitätsgrad zu erhalten, ist das Ausführungsmittel zumeist als universell einsetzbares Computersystem gebildet, was insbesondere den Vorteil hat, dass das Ausführungsmittel spezifisch an die Anforderungen der Ablaufsteuerung angepasst werden kann und somit bspw. hochspezifische und zumeist besonders kompakt ausgebildete Minimalsysteme, so genannte Einplatinen-Computer (SBC Single-Board-Computer), eingesetzt werden können. Bei komplexen Betriebsleiteinrichtungen bzw. wenn hohe Leistungsanforderungen an die Ablaufsteuerung gestellt werden, kann das Ausführungsmittel auch durch ein Computersystem gebildet sein, wie dies im Bereich der elektronischen Datenverarbeitung weit verbreitet ist. Insbesondere hat eine derartige Ausbildung den Vorteil, dass beim Entwurf der Ablaufsteuerung grundlegende technische Vorrichtungen zur Kommunikationsein- und -ausgabe bzw. zur Datenverwaltung dem Entwickler der Ablaufsteuerung bereitstehen und sich dieser somit voll auf den Entwurf der Ablaufsteuerung konzentrieren kann. Bei der Entwicklung bzw. beim Entwurf einer Ablaufsteuerung ergibt sich jedoch zumeist das Problem, dass die von der Ablaufsteuerung zu steuernde technische Vorrichtung noch nicht, oder nur teilweise funktional vorhanden bzw. zugreifbar ist. Daher muss zur Überprüfung der korrekten Funktion mit einem individuell anzupassenden Testsystem gearbeitet werden. Gerade bei Ablaufsteuerungen die zumeist hoch automatisiert und üblicherweise ohne Bedienerinteraktion ablaufen müssen, ist es von ganz besonderer Bedeutung, dass sicherheitskritische Betriebszustände innerhalb der gesteuerten technischen Vorrichtung auf jeden Fall verhindert werden. Unter dem Sammelbegriff "sicherheitskritische Zustände" werden all jene Vorgänge zusammengefasst, die für den Bediener, die technische Vorrichtung selbst sowie beispielsweise Werkteile und/oder gegebenenfalls weitere erforderliche technische Komponenten, eine Verletzungs- oder Beschädigungsgefahr darstellen.

Zur Verhinderung derartiger sicherheitskritischer Zustände wurden bislang redundante Sicherheits-Kontrollsysteme verwendet, welche die Auswirkungen der Steuerungsanweisungen überwachen und bei einem Fehlerzustand die Ablaufsteuerung zumeist mittels einer Not-Stop Schaltung anhalten. Derartige Sicherheits-Kontrollsysteme überprüfen zumeist jedoch nur Sensor- und Steuersignale von und zur Maschine, eine umfassende Überprüfung aller ablaufenden Vorgänge innerhalb einer Ablaufsteuerung wird zumeist aufgrund des hohen Komplexitätsgrades nicht durchgeführt. Auch hat das Konzept derartiger Sicherheits-Kontrollsysteme den Nachteil, dass ein Fehler, der bei den abschließenden Tests der Ablaufsteuerung nicht erkannt wurde, im Echtbetrieb auftreten kann und dort ein wesentliches Gefährdungspotential darstellt, da es dann zumeist nur noch von der Reaktionsgeschwindigkeit und Zuverlässigkeit des Sicherheits-Kontrollsystems anhängt, ob ein Schaden verhindert wird. Von Nachteil ist insbesondere, dass es im Betrieb eine im Wesentlichen unbekannte Anzahl möglicher Fehler gibt, die auftreten können und somit die Zuverlässigkeit des gesteuerten Systems beeinträchtigen, da mit einem aufgetretenen und abgefangenen Fehler zumeist auch eine Betriebsstörung in der Form einer Betriebsunterbrechung einhergeht. Eine grundsätzliche Ausschaltung möglicher systematischer Fehler ist bei bekannten Sicherheits-Kontrollsystemen nicht vorgesehen. Auch kann es durch Anpassungen der in Betrieb genommenen Ablaufsteuerung vorkommen, dass eine Fehlersituation bzw. Fehlerquelle entsteht, die beim Entwurf des Sicherheits-Kontrollsystems nicht berücksichtigt wurde und somit beim Betrieb der Ablaufsteuerung nicht als Fehler erkannt wird, was wiederum zur Gefährdung des Bedieners bzw. der technischen Vorrichtung führt. Aufgrund sicherheitstechnischer Vorschriften können jedoch immer zusätzliche Sicherheitssysteme vorhanden sein, um bspw. die vorgeschriebenen sicherheitstechnischen Abnahmekriterien zu erfüllen. Auch können in einzelnen steuerungstechnischen Komponenten Sicherheitssysteme vorhanden sein, die vom Hersteller der Komponente vorgegeben sind und vom Endbenutzer bzw. einem Entwickler einer Ablaufsteuerung nicht veränderbar und ggf. auch nicht zugreifbar sind.

Nachteilig an bekannten Ablaufsteuerungen ist insbesondere, dass das Ablaufmittel zur Durchführung der gewünschten Steuerungsaufgabe und das erforderliche Sicherheits-Kontrollsystem eigenständige Systeme sind und zumeist nur über Schnittstellen miteinander kommunizieren. Eine systeminhärente Sicherheits-Kontrollfunktionalität ist bei bekannten Ablaufsteuerungen nicht gegeben. Insbesondere kann es somit aufgrund von systematischen Fehlern in der Anordnung der Kommandos im Ablaufprogramm bei der Abarbeitung desselben durch die Ablaufsteuerung zu einem Fehlerzustand kommen, welcher vom Sicherheits-Kontrollsystem abgefangen werden muss und dadurch zumeist zu einer Betriebsstörung führt.

Aus dem Stand der Technik sind ferner Entwicklungs- und Überwachungsverfahren bekannt, um während der Ausführung eines Programms auf einem Zielsystem, Parameter, insbesondere Inhalte von Speicherstellen, zu prüfen.

Beispielsweise offenbart das Dokument EP 2 244 143 A1 ein Verfahren zur Programmierung einer Industriesteuerung, insbesondere eines Steuerungscontrollers. Dabei wird ein, in einer Hochsprache geschriebenes Programm, mittels eines Compilers in einen ausführbaren Maschinencode übersetzt, welcher anschließend in einen Programmspeicher des Steuerungscontrollers übertragen wird. Während der Ausführung des Maschinencodes durch den Steuerungscontroller wird ein Debug-Werkzeug aktiviert, welches mittels Sensordaten die aktuell im Steuerungscontroller ausgeführten Anweisungen mit den Anweisungen der Hochsprache abgleicht und eine Rückwärtsbeziehung bildet, sodass im Programmeditor die aktuell ausgeführte Hochsprache- Programmcodeanweisung dargestellt wird. Die Ermittlung dieser Rückwärtsbeziehung kann einen Dekompilierungsprozess des Maschinencodes erforderlich machen. Insbesondere wird somit eine Ursache-Wirkungs-Kette zwischen dem Hochsprache-Programmcode und dem gesteuerten System erreicht. Das Programmierwerkzeug zur Erstellung des Hochsprache-Programmcodes umfasst einen Compiler, um das Hochsprache-Programmcode in einen Maschinencode zu übersetzen. Dieser Maschinencode wird dann über eine Schnittstelle in den Programmspeicher des Steuerungscontrollers übertragen. Über eine Kommunikationsverbindung ist das Debugging-Werkzeug in der Lage, die aktuell am Steuerungscontroller ausgeführte Maschinenanweisung zu identifizieren.

Auch aus dem Dokument DE 10 2004 062 852 A1 ist eine Maschinensteuerung bekannt, welche Steuerung ein Anwenderprogramm ausführt, in welchem aktivier- und/oder deaktivierbare Haltepunkte vorhanden sind.

Die Aufgabe der Erfindung liegt also darin ein Verfahren zur Erstellung eines Ablaufprogramms für eine Maschinensteuerung zu schaffen, bei der eine sicherheits- bzw. ablauftechnische Kontrollfunktionalität implizit durch die Anweisungen zur Durchführung der Steuerungsaufgabe gewährleistet ist. Insbesondere ist es Aufgabe der Erfindung das Verfahren derart auszubilden, das systematische Fehler im Ablaufprogramm verhindert werden.

Die Aufgabe der Erfindung wird dadurch gelöst, dass die integrierte Entwicklungsumgebung für eine spezifische Maschine konfiguriert werden kann, wobei für diese maschinenspezifische Konfiguration und für zumindest eine maschinenspezifische Programmschnittstelle, eine Schnittstellenvereinbarung in der integrierten Entwicklungsumgebung (IDE) hinterlegt wird, wobei in dieser Schnittstellenvereinbarung ferner ein maschinenspezifischer Befehlssatz und ein Satz initialer Zustände und Zustandsbedingungen hinterlegt wird und wobei für zumindest eines der Kommandos des maschinenspezifischen Befehlssatzes ein Satz von Vor- und Nachbedingungen hinterlegt wird. Ferner wird in der integrierten Entwicklungsumgebung eine Zustandswissensbasis aufgebaut, welche nach einer Änderung des Ablaufprogramms aktualisiert und/oder neu gebildet wird und wobei der Benutzer eine Programminstruktion des Ablaufprogramms als Bezugsbereich für eine Unterstützungsanforderung auswählt, wobei die integrierte Entwicklungsumgebung unter Einhaltung der Vorgaben für die semantisch korrekte Verwendung der maschinenspezifischen Kommandos, im ausgewählten Bezugsbereich die Zustandswissensbasis analysiert und aufbereitet und dem Benutzer das Ergebnis der Analyse auf einem Ausgabegerät darstellt.

Unter einer maschinenspezifischen Programmschnittstelle wird eine Schnittstelle für ein vorgegebenes Programmmodul verstanden, welches die maschinenspezifischen Funktionen für ein übergeordnetes Anwenderprogramm bereitstellt. Diese Schnittstelle dient zur Kommunikation zwischen unterschiedlichen Modulen des Ablaufprogramms während der Ausführung durch ein Ausführungsmittel einer Ablaufsteuerung. Das Programmmodul kann dabei bspw. vom Maschinenhersteller bereitgestellt werden, und ist somit für den Benutzer nur über die Schnittstellenvereinbarung bzw. die Schnittstelle zugänglich bzw. verwendbar.

Unter Schnittstellenvereinbarung wird eine Beschreibung zu dieser Schnittstelle verstanden, welche die IDE benutzt bzw. durch welche die IDE so konfiguriert wird, dass der Benutzer bei der Erstellung des Ablaufprogramms die geeignete Unterstützung erhält, insbesondere erhält der Benutzer eine Information betreffend die Liste der verwendbaren Befehle, Parameter und Variablen, und insbesondere auch Regeln zur semantisch korrekten Zusammenstellung mehrerer Befehle, wobei die Regeln durch die IDE bei der Durchführung des erfindungsgemäßen Verfahrens überprüft werden.

Als integrierte Entwicklungsumgebung wird von einer elektronischen Datenverarbeitungseinrichtung ein System bereitgestellt, welches universell einsetzbar ist und insbesondere durch eine maschinenspezifische Konfiguration auf einen konkreten Einsatzfall angepasst werden kann, insbesondere auch auf einen bestimmten Maschinentyp oder einen bestimmten Konfigurationszustand einer Maschine. Insbesondere werden durch eine derartige, maschinenspezifische Konfiguration, vereinfacht ausgedrückt, die funktionalen Möglichkeiten des Systems beschrieben, für welches mittels der IDE ein Ablaufprogramm erstellt werden soll. Dies umfasst nicht nur die übliche Bereitstellung eines maschinenspezifischen Befehlssatzes, sondern insbesondere eines Satzes von Regeln zur maschinenspezifischen, semantisch korrekten Zusammenstellung der Befehle zu einem Applikationsprogramm. Ein Ablaufprogramm für eine zustandsbasierte Maschinensteuerung wird eine Mehrzahl universeller Programmanweisungen aufweisen, welche für eine Mehrzahl von Maschinensteuerungen in gleicher Weise verwendet werden können. Zusätzlich dazu wird es jedoch Kommandos geben, die ausschließlich für einen spezifischen Typ einer Maschine zulässig sind. Eine maschinenspezifische Konfiguration wird nun eine universelle Entwicklungsumgebung auf das Zielsystem des zu entwickelnden Ablaufprogramms festlegen. Als Zielsystem wird der Maschinentyp bzw. eine technische Konfigurationsvariante einer Maschine verstanden. Zur Kommunikation mit der IDE bzw. einem Laufzeitsystem, ist für eine maschinenspezifische Konfiguration zumindest eine maschinenspezifische Programmschnittstelle vorgesehen, wobei diese die bereits zuvor beschriebenen Merkmale aufweist. Insbesondere legt der maschinenspezifische Befehlssatz fest, welche Kommandos, insbesondere welche Ablaufsteuerungskommandos, für die spezifische Ablaufsteuerung zulässig sind und vom Benutzer zur Erstellung eines Ablaufprogramms verwendet werden können. Durch diesen maschinenspezifischen Befehlssatz kann der Benutzer sicher sein, bei der Erstellung des Ablaufprogramms ausschließlich zulässige Kommandos einzusetzen.

Gerade für zustandsbasierte Ablaufsteuerungen ist es wichtig, dass sich vor Ausführung des Ablaufprogramms die Maschinensteuerung, bzw. die zu steuernde Maschine, in einem definierten Zustand befindet, oder ein solcher definierter Zustand durch Ausführung entsprechender Initialisierungssequenzen hergestellt wird, beispielsweise ein langsames Verfahren einer Achse, bis ein bestimmter Endschalter anspricht. Durch den hinterlegten Satz initialer Zustände und Zustandsbedingungen wird nun ein initialer Zustand der Maschine bzw. der Ablaufsteuerung sichergestellt bzw. festgelegt, wobei auch ein unbekannter Zustand einer Maschinenkomponente als initiale Zustandsinformation verstanden wird. In einem ersten Initialisierungsschritt des Ablaufprogramms werden die betreffenden Maschinenkomponenten durch Initialisierungskommandos in einen definierten Ausgangszustand übergeführt, so dass dann eindeutig fest steht, in welchem Zustand sich die zusteuernde Maschine bzw. die Ablaufsteuerung befindet. Von Bedeutung ist hier, dass dadurch unmittelbar bekannt ist, welche initialen Zustände und Zustandsbedingungen vorhanden sind und dass diese entsprechend behandelt werden müssen, sodass die Gefahr nicht initialisierter Maschinenkomponenten zuverlässig verhindert wird. Insbesondere hat dies jedoch den besonderen Vorteil, dass die Bedingungs- und Zustandsprüfung von jeder maschinenspezifischen Konfiguration und insbesondere für jede maschinenspezifische Programmschnittstelle durchgeführt wird, ohne dass dafür ein globales Prüfsystem erforderlich wäre, welches alle Bedingungen und Zustände die während der Abarbeitung des Ablaufprogramms auftreten können, überprüft, um so gegebenenfalls eine gefährliche Handlung zu verhindern. Die unmittelbare Fehler- bzw. Plausibilitätsprüfung ist somit integrierter Bestandteil jedes elementaren Abschnitts eines Ablaufprogramms und wirkt sich global auf das gesamte Ablaufprogramm aus. Die IDE unterstützt den Anwendungsprogrammierer dabei, bereits bei der Erstellung des Ablaufprogramms die jeweils relevanten Sicherheitsbedingungen einzuhalten bzw. sorgt die IDE dafür, dass fehlende Sicherheitsabfragen und unzulässige Befehlsabfolgen sofort bei der Programmierung als Programmfehler aufscheinen und nicht erst zur Laufzeit des Programms als Fehler zu einer Betriebsstörung führen können. Dadurch erfolgt das Feststellen und Identifizieren eines Fehlers bereits zum Zeitpunkt der Entwicklung des Ablaufprogramms, wodurch ein etwaiger hoher Schaden durch eine Produktionsstörung zufolge eines späteren Fehlereintritts verhindert wird.

Ferner ist vorgesehen, dass für ein Kommando des maschinenspezifischen Befehlssatzes festgelegt werden kann, welche Vorbedingungen erfüllt sein müssen, bevor das Kommando ausgeführt wird, bzw. welche Nachbedingungen nach Ausführung des Kommandos Gültigkeit haben. Für das Beispiel des Roboters könnte dies nun bedeuten, dass die Steuereinheit zum Verschwenken des Roboters erst dann aktiviert werden darf, wenn zuvor ein Steuerungselement aktiviert wurde bzw. ein Kommando ausgeführt wurde, welche den Roboterarm, beispielsweise um eine festgelegte Distanz von einer Arbeitsmaschine entfernt hat, sodass die Verschwenkbewegung keine Beschädigung der Werkzeugmaschine bzw. des Werkteils verursachen kann. Eine Nachbedingung kann beispielsweise darin bestehen, dass ein Werkteil erfolgreich gegriffen werden konnte, wodurch erst daran anschließende Manipulationsvorgänge ermöglicht werden, insbesondere solche Manipulationsvorgänge zulässig werden. Dies hat wiederum den Vorteil, dass bei der Erstellung des Ablaufprogramms eine inhärente Prüfung auf Zulässigkeit der Anordnung der Befehle erfolgt.

Dazu wird von der Entwicklungsumgebung eine Zustandswisserisbasis aufgebaut, welche bereits bei der Erstellung des Ablaufprogramms, insbesondere für jede Programmzeile bzw. jede Programminstruktion, Informationen über die aktuell herrschenden Maschinenzustände bzw. Ablaufbedingungen enthält. Vereinfacht dargestellt ist in dieser Zustandswissensbasis für jede Instruktion des Ablaufprogramms hinterlegt, in welchen möglichen Maschinenzuständen sich die Maschinensteuerung beim Erreichen der jeweiligen Programminstruktion befinden kann, wenn das aktuell entwickelte Ablaufprogramm ausgeführt würde. Je nachdem, über welche Programmverzweigungen und unter welchen Bedingungen eine bestimmte Stelle im Programm erreicht werden kann, können dort mehrere verschiedene Maschinenzustände vorliegen. Jeder der möglichen Maschinenzustände muss den Vorbedingungen eines Kommandos genügen, damit das jeweilige Kommando als Programminstruktion zulässig ist. Durch den Aufbau und die laufende Aktualisierung, Analyse und Überprüfung der Wissensbasis während der Programmerstellung, kann bei der Entwicklung des Ablaufprogramms sichergestellt werden, dass es bei der späteren Ausführung des Ablaufprogramms zu keinen sicherheitskritischen Zuständen bzw. zu einer Verletzung von Bedingungen kommen kann. Somit ist eine Prüfung bzw. Simulation der Ausführung des Ablaufprogramms möglich, ohne dass dafür eine eigene Simulationsumgebung erforderlich wäre bzw. ohne dass an der zu steuernden Maschine ein Testlauf erforderlich wäre. Wobei eine Simulation im herkömmlichen Sinne nicht alle Möglichkeiten bietet, die sich aus dem erfindungsgemäßen Verfahren ergeben. Bei einer Simulation würde der Maschinenbetrieb quasi 1:1 nachgefahren - aber eben nur ganz genau ein konkreter Programmlauf, je nachdem, welche bedingten Verzweigungen und Anweisungen ausgeführt wurden und welche nicht. Daraus ergibt sich nach jeder Anweisung genau ein bestimmter Maschinenzustand. Ein Fehler, der sich nur unter ganz besonderen Bedingungen zeigt, wird in einer solchen Simulation nur erkennbar, wenn diese besonderen Bedingungen nachgestellt werden. Beim erfindungsgemäßen Verfahren wird jedoch mittels graphentechnischer Analyse, basierend auf einem Teil der Daten der Zustandswissensbasis, zu jeder Programminstruktion die Menge aller prinzipiell möglichen und erreichbaren Maschinenzustände ermittelt. Somit ist insbesondere mit dieser Zustandswissensbasis eine Unterstützung des Entwicklers durch die Entwicklungsumgebung dahingehend möglich, dass der Entwickler eine Programminstruktion des Ablaufprogramms auswählt, und diese als Bezugsbereich für eine Unterstützungsanforderung dient, worauf von der Entwicklungsumgebung der aktuelle Zustand des bis zu diesem Zeitpunkt entwickelten Ablaufprogramms analysiert und auf Einhaltung aller definierten Bedingungen für die semantisch korrekte Verwendung der Programminstruktion geprüft wird und dieses Ergebnis dem Benutzer dargestellt wird, woraufhin dieser eine entsprechend semantisch korrekte Anordnung der Befehle herstel-, len kann. Durch das erfindungsgemäße Verfahren kann der Benutzer sicher sein, zu jedem Zeitpunkt der Entwicklung des Ablaufprogramms ein semantisch korrektes Ablaufprogramm zu entwickeln bzw. semantische Fehler unmittelbar zu erkennen. Dies wird insbesondere erreicht, ohne dass dafür ein eigenes bzw. zusätzliches Sicherheitskontrollsystem parallel entworfen, entwickelt und gewartet werden muss. Die Sicherstellung eines semantisch korrekten Ablaufprogramms wird von der Entwicklungsumgebung bereits während der Entwicklung des Ablaufprogramms zuverlässig gewährleistet.

Bei einer konventionellen Programmierung eines Ablaufprogramms für eine Ablaufsteuerung kann jedes Kommando aus dem Kommandovorrat unter Einhaltung syntaktischer Vorgaben im Wesentlichen in beliebiger Reihenfolge angeordnet werden, wodurch die Gefahr besteht, dass ein ungültiges Ablaufprogramm erstellt wird bzw. dass ein Ablaufprogramm erstellt wird, welches maschinenspezifische Ablaufbedingungen verletzt. Daher ist eine Weiterbildung von Vorteil, nach der bei der Zuordnung der Vorbedingungen und Nachbedingungen zu einem Kommando, eine zulässige Ausführungsreihenfolge zweier oder mehrerer Kommandos festgelegt wird. Somit lässt sich sicherstellen, dass mit dem erfindungsgemäßen Verfahren ein Ablaufprogramm erstellt wird, bei dem die Kommandos nur in einer semantisch sinnvollen und zulässigen Abfolge, insbesondere unter Einhaltung der festgelegten Vor- und Nachbedingungen, aneinander gereiht werden.

Ein Vorteil des erfindungsgemäßen Verfahrens liegt insbesondere darin, dass für jedes Kommando Vor- und Nachbedingungen festgelegt sind, um somit eine zulässige Ausführungsreihenfolge unter Einhaltung relevanter Ablaufkriterien sicherzustellen. Nach einer Weiterbildung kann für ein Kommando des maschinenspezifischen Befehlssatzes als Nachbedingung die Aufhebung von zumindest einer Nachbedingung eines weiteren Kommandos des maschinenspezifischen Befehlssatzes bestimmt werden, wodurch sich zulässige Kommandosequenzen festlegen lassen. Beispielsweise hat ein Kommando A als Nachbedingung "a", was anzeigt, dass das Kommando A ausgeführt wurde. Kommando B hat als Vorbedingung "a" und hebt als Nachbedingung "a" wieder auf. Damit ist sichergestellt, dass Kommando B nur nach Ausführung von Kommando A möglich ist und auch nur genau einmal. Eine Kommandosequenz A B ist damit zulässig, eine Sequenz A B B verletzt die Vor- und Nachbedingungen und ist somit nicht zulässig. Gibt es ein weiteres Kommando C, welches ebenfalls "a" aufhebt, so kann nach A entweder Kommando B oder C ausgeführt werden, aber nicht beide.

Eine Weiterbildung zielt auf eine Modularisierung der Ablaufsteuerung bzw. der Steuerungssoftware im Einklang mit einer Modularisierung der Maschine ab, in dem die Maschine funktional in mehrere, im Wesentlichen eigenständig steuerbare Maschinenkomponenten gegliedert ist. Dabei ist einer bestimmten funktionalen Maschinenkomponente genau ein Softwaremodul zugeordnet, in dem alle dazu gehörenden spezifischen Maschinenkommandos, Variablen, Ereignisse, Fehlerbehandlungen, ... implementiert sind und nur über eine definierte Schnittstelle in definierter Weise mit anderen Softwarekomponenten in Verbindung treten können. Die Maschinen selbst sind häufig modular gestaltet, d.h. es können bestimmte Komponenten vorhanden sein oder fehlen, oder unterschiedliche Varianten einer Komponente vorhanden sein. Durch die anspruchsgemäße Weiterbildung ist sichergestellt, dass jede Maschinenkomponente nur über eine wohldefinierte Komponentenprogrammschnittstelle angesprochen werden kann. Insbesondere wird somit eine Unabhängigkeit der von dem Ablaufprogramm zu steuernden Funktion von den technischen Betriebsmitteln der Maschinenkomponenten erreicht, solange diese den Anforderungen der Komponentenprogrammschnittstelle bzw. der Schnittstellenvereinbarung genügen. Somit lässt sich ein Ablaufprogramm erstellen, ohne dass die konkrete, technische Realisierung der Maschinenkomponente feststeht, solange diese die Schnittstellenvereinbarung bereitstellt bzw. erfüllt.

Neben Bedingungen die grundlegend bei der Erstellung des Ablaufprogramms gelten müssen, ist es weiters von Vorteil, wenn für die maschinenspezifische Konfiguration der integrierten Entwicklungsumgebung ein Satz von Beschränkungsregeln festgelegt wird, welche durch Verknüpfung von zumindest einer Teilmenge der im Programmlauf erfassbaren Eigenschaften zur Beschreibung der Maschinenzustände gebildet werden. Diese Beschränkungsregeln beschreiben logisch auswertbare Bedingungen, welche im ordnungsgemäßen und sicheren Betriebsfall zu jeder Zeit Gültigkeit haben müssen bzw. die unter keinen Umständen eintreffen dürfen. Insbesondere wird die den Programminstruktionen zugeordnete Zustandsinformation hinsichtlich der Einhaltung der Beschränkungsregeln nach einer planmäßigen Ausführung derselben und/oder nach der planmäßigen Ausführung weiterer Kommandos geprüft und das Ergebnis der Prüfung der Zustandswissensbasis hinzugefügt, insbesondere der jeweiligen Programminstruktion zugeordnet.

Bei der Erstellung eines Ablaufprogramms kann der Benutzer unbeabsichtigt oder zufällig eine unzulässige Anordnung von Kommandos bzw. Programminstruktionen herstellen. Durch Auslösung der Unterstützungsanforderung werden von der integrierten Entwicklungsumgebung die bisher angeordneten Kommandos geprüft und dem Benutzer als Ergebnis der Unterstützungsanforderung jene Programminstruktionen dargestellt, für welche eine Vorbedingung oder eine gegebenenfalls festgelegte Beschränkungsregel verletzt wird. Somit kann der Benutzer einfach, schnell und sicher prüfen, welche Kommandos bzw. Programmteile einer Überarbeitung bedürfen, um ein zulässiges Ablaufprogramm herzustellen.

Da aufgrund der Komplexität eines Ablaufprogramms gegebenenfalls die Auswahl des Bezugsbereichs Schwierigkeiten machen kann, da nicht sofort auf einen Blick erkennbar sein muss, welche Programminstruktionen des Ablaufprogramms zu einem logisch zusammengehörendem Programmabschnitt gehören, ist eine Weiterbildung von Vorteil, nach der die Auswahl des Bezugsbereichs automatisch auf den logisch zusammengehörenden Programmabschnitt erweitert wird. Insbesondere erfolgt die Auswahl des Bezugsbereichs durch Positionieren eines Cursors oder Anklicken einer Stelle innerhalb einer Darstellung der Programminstruktionen des Ablaufprogramms, wobei von der integrierten Entwicklungsumgebung die gegebenenfalls vorhandenen vor- und nachgelagerten Programminstruktionen geprüft werden und darauf basierend, der Bezugsbereich entsprechend ausgedehnt wird. Es wird beispielsweise eine Instruktion in einem bedingt ausgeführten Programmzweig angeklickt und damit eine Überprüfung des gesamten bedingten Programmzweigs durchgeführt (oder analog des gesamten Inhalts eines Schleifenrumpfes oder einer Unterroutine).

Zur eindeutigen Identifizierung einer unzulässigen Anordnung von Programminstruktionen ist eine Weiterbildung von Vorteil, nach der jene Programminstruktionen für die Vorbedingungen oder gegebenenfalls Beschränkungsregeln verletzt werden, von der integrierten Entwicklungsumgebung am Ausgabegerät in einem separaten Ausgabefenster aufgelistet werden und wobei der Benutzer durch Auswahl eines Listeneintrags die jeweils zugeordnete Stelle bzw. Programminstruktion des Ablaufprogramms aufrufen kann und ihm diese nachfolgend dargestellt wird. Im Zuge der Unterstützungsanforderung wird das Ablaufprogramm analysiert und geprüft und gegebenenfalls eine Mehrzahl von Regel- bzw. Bedingungsverletzungen festgestellt. Zur Erleichterung der Behebung der Mängel ist es daher von Vorteil, wenn diese dem Benutzer übersichtlich aufgelistet dargestellt werden, woraufhin dieser die Liste schrittweise abarbeiten kann und durch Klick auf den Listeneintrag direkt auf die relevante Programminstruktion verwiesen wird.

Im Gegensatz zu bekannten Entwicklungsumgebungen hat das erfindungsgemäße Verfahren den Vorteil, dass von der integrierten Entwicklungsumgebung dem Benutzer nach Auswahl des Bezugsbereichs und Auslösen der Unterstützungsanforderung, die an der gewählten Stelle möglichen Maschinenzustände dargestellt werden, wobei insbesondere eine Darstellung als animiertes Schaubild bevorzugt ist. Der Vorteil ist, dass dem Programmierer beim Klicken auf eine Programmstelle der an dieser Stelle vorliegende Maschinenzustand bzw. die verschiedenen möglichen Zustände optisch dargestellt werden. Wird beispielsweise eine Instruktion zum Starten eines Antriebs als semantisch unzulässig signalisiert, so klickt der Programmierer auf diese Instruktion und sieht in dem Schaubild sofort, dass an dieser Programmstelle ein möglicher Maschinenzustand existiert, bei dem die Schutztüre geöffnet ist.

Da die integrierte Entwicklungsumgebung in der Zustandswissensbasis für jede einzelne Programmstelle nicht nur einen konkreten simulierten Maschinenzustand ermittelt und zuordnet, sondern je nach Vorhandensein alternativer Ausführungspfade und vorgelagerter bedingter Instruktionen über welchen eine solche Programmstelle erreichbar ist, eine Mehrzahl unterschiedlicher und alternativ möglicher Maschinenzustände ermittelt und zuordnet, wird gemäß der Weiterbildung nach der beim Vorliegen mehrerer für den ausgewählten Bezugsbereich alternativ möglicher Zustandsszenarien, die integrierte Entwicklungsumgebung am Ausgabegerät dem Benutzer eine Auswahlmöglichkeit zum Wechsel der Darstellung zwischen den möglichen Zustandsszenarien bereit stellt, für den Benutzer eine komfortable Möglichkeit geschaffen, sich rasch einen Überblick über die verschiedenen Zustandsszenarien zu verschaffen.

Eine weitere Unterstützung für den Benutzer bei der Entwicklung eines Ablaufprogramms besteht darin, dass die integrierte Entwicklungsumgebung dem Benutzer als Ergebnis der Unterstützungsanforderung eine Liste von maschinenspezifischen Kommandos ermittelt und am Ausgabegerät dargestellt, für welche Kommandos in einem vom Benutzer ausgewählten Bezugsbereich sowohl die Vorbedingungen zu deren Ausführung überprüft wurden und erfüllt sind, als auch nach deren planmäßiger Ausführung alle gegebenenfalls festgelegten Beschränkungsregeln eingehalten werden. Somit bekommt der Benutzer bei der Erstellung des Ablaufprogramms nur jene maschinenspezifischen Kommandos vorgeschlagen, die an der jeweiligen Programmstelle für die Erstellung eines gültigen Ablaufprogramms zulässig sind.

Eine Weiterbildung besteht ferner darin, dass der Benutzer zur Auslösung einer Unterstützungsanforderung ein Kommando aus einer dargestellten Liste von Kommandos auswählt und die integrierte Entwicklungsumgebung dem Benutzer als Ergebnis der Unterstützungsanforderung mögliche Einfügestellen im Bezugsbereich des Ablaufprogramms ermittelt und am Ausgabegerät darstellt. Dabei ist sicher gestellt, dass für das gewählte Kommando an der jeweiligen Einfügestelle sowohl alle Vorbedingungen zur Ausführung erfüllt sind, als auch nach dessen planmäßiger Ausführung alle gegebenenfalls festgelegten Beschränkungsregeln eingehalten werden. Somit wird wiederum dem Benutzer eine Unterstützung gegeben, um für ein gewünschtes Kommando semantisch zulässige Einfügepositionen zu finden, in der Folge eine bestimmte Einfügeposition auszuwählen und das Kommando dort einzufügen und somit ein gültiges Ablaufprogramm zu erstellen.

Auch kann von der integrierten Entwicklungsumgebung im Rahmen einer Unterstützungsanforderung zumindest ein Korrekturvorschlag für das Ablaufprogramm generiert werden, dessen Anwendung die Einhaltung der Vorbedingungen und der gegebenenfalls festgelegten Beschränkungsregeln für alle Programminstruktionen im Bezugsbereich führt. Insbesondere umfasst der Korrekturvorschlag eine oder mehrere Operationen, um bestehende Kommandos entsprechend anzupassen, insbesondere um Kommandos hinzuzufügen, zu löschen und zu verschieben, und die vorgesehenen Änderungen nach einer erfolgten Bestätigung durch den Benutzer automatisch von der integrierten Entwicklungsumgebung vornehmen zu lassen. Der Benutzer erhält also nach Auswahl des Bezugsbereichs automatisch eine Korrektur fehlerhafter bzw. nicht korrekt positionierter Anweisungen, welche er nach Bestätigung in das Ablaufprogramm übernehmen kann.

Von Vorteil ist dabei eine Weiterbildung, nach der zwei oder mehrere alternative Korrekturvorschläge ermittelt werden, welche dem Benutzer am Ausgabegerät zur Auswahl für die Voransicht der jeweiligen Änderungen dargestellt werden. Da von der integrierten Entwicklungsumgebung nur eine formale Prüfung durchgeführt werden kann, diese jedoch mehrfach durchgeführt werden kann, hat diese Weiterbildung den Vorteil, dass der Benutzer einen der möglichen angebotenen Korrekturvorschläge wählen kann, der für die Erstellung des Ablaufprogramms am besten passt.

Da für die Durchführung eines von der integrierten Entwicklungsumgebung generierten Korrekturvorschlags gegebenenfalls unterschiedlich komplexe Änderungen bzw. Anpassungen erforderlich sind, ist es von Vorteil, wenn für jeden generierten Korrekturvorschlag ein Aufwandsmaß ermittelt wird und dieses dem Benutzer dargestellt wird. Somit kann der Benutzer intuitiv entscheiden, welcher Korrekturvorschlag die bestmögliche Wahl darstellt bzw. der von ihm beabsichtigten Programmsequenz am besten entspricht.

Von Vorteil ist ferner eine Weiterbildung, nach der der Benutzer einen Bezugsbereich mit mindestens einer möglichen Einfügestelle für Programminstruktionen auswählt und ferner ein oder mehrere Kommandos in einer Auswahlliste selektiert und die Unterstützungsanforderung auslöst. Von der integrierten Entwicklungsumgebung wird nun ein Erweiterungsvorschlag generiert, bei dem für die getroffene Auswahl die Vorbedingungen und Beschränkungsregeln geprüft und eingehalten werden und insbesondere nach einer erfolgten Bestätigung durch den Benutzer die vorgesehenen Änderungen aufgrund des Erweiterungsvorschlags von der integrierten Entwicklungsumgebung automatisch vorgenommen werden.

Zur Entwurfsunterstützung ist es ferner von Vorteil, wenn die vom Benutzer für die Erweiterung selektierten Kommandos von der integrierten Entwicklungsumgebung automatisch durch weitere Kommandos aus dem maschinenspezifischen Befehlssatz ergänzt werden, welche zur Einhaltung der Vorbedingungen und der gegebenenfalls vorgesehenen Beschränkungsregeln benötigt werden. Beispielsweise können bestimmte erforderliche Sicherheitsabfragen automatisch ergänzt werden. Somit wird eine deutliche Verkürzung der Entwicklungszeit erreicht, da von der integrierten Entwicklungsumgebung automatisch Kommandos und Basisstrukturen des Programms ergänzt werden, ohne dass dafür jeweils eine gesonderte Interaktion des Benutzers erforderlich wäre.

Auch ist es von Vorteil, wenn von der integrierten Entwicklungsumgebung zusätzlich ein oder mehrere alternative Erweiterungsvorschläge generiert werden, die dem Benutzer zur Auswahl am Ausgabegerät dargestellt werden, wobei insbesondere wiederum alle selektierten Kommandos unter Einhaltung der Vorbedingungen und gegebenenfalls vorgesehene Beschränkungen erstellt werden. Der Benutzer kann somit wiederum einen Vorschlag auswählen, welcher der von ihm beabsichtigten Programmsequenz am nächsten kommt.

Von Vorteil ist es auch, wenn für die generierten Erweiterungsvorschläge durch die integrierte Entwicklungsumgebung jeweils ein Aufwandsmaß ermittelt wird und dem Benutzer dargestellt wird. Bei der Ermittlung des Aufwandsmaßes können beispielsweise Größen wie der Zuwachs an Programmkomplexität, die Veränderung der Ausführungsgeschwindigkeit, der Speicherbedarf oder die Einbuße an Flexibilität und Optionen für die weitere Programmgestaltung berücksichtigt und gegeneinander abgewogen werden. Darüber hinaus wird dem Benutzer der Vorschlag mit dem geringsten Aufwandsmaß an erster Stelle dargestellt, da dieser mit einiger Wahrscheinlichkeit auch der vorteilhafteste ist.

Da nach einer Weiterbildung in der Schnittstellenvereinbarung ein Satz von während der Ausführung des Ablaufprogramms durch die Maschinensteuerung erfassbaren Betriebszuständen und Statusinformationen hinterlegt wird, ist während der Ausführung des Ablaufprogramms jederzeit über die Schnittstelle der aktuelle Zustand des Moduls und der zugeordneten Maschinenkomponente abfragbar. Von Vorteil ist ferner, wenn in der Schnittstellenvereinbarung ein Satz von, während der Ausführung des Ablaufprogramms durch die Maschinensteuerung, ausgelösten Ereignissen hinterlegt wird. Wie bereits zuvor erwähnt, konfiguriert die Schnittstellenvereinbarung die IDE derart, dass der Benutzer die Betriebszustände und Ereignisse im Ablaufprogramm verwenden kann bzw. stellt die IDE dem Benutzer zur Programmierzeit geeignete Symbole zur Verfügung. Die Abfrage von Variablen oder die Reaktion auf Ereignisse erfolgt aber während der Ausführung des Ablaufprogramms über die Schnittstelle.

Neben Bedingungen bzw. Zuständen, die während des Programmlaufs entstehen, ist es von Vorteil, wenn die Bildung und/oder Aktualisierung der Zustandswissensbasis unter Einbeziehung der gegebenenfalls festgelegten, initialen Zustände und Zustandsbedingungen erfolgt. Somit kann das Ablaufprogramm bzw. die Maschinensteuerung unmittelbar in einem Anfangszustand versetzt werden, um somit gewisse Ausführungserfordernisse festlegen zu können.

Da in einem Programmlauf gegebenenfalls unterschiedliche Anweisungspfade möglich sind, ist eine Weiterbildung von Vorteil, nach der die Bildung und/oder Aktualisierung der Zustandswissensbasis unter Einbeziehung von gegebenenfalls vorhandenen Verzweigungen und Zusammenführungspunkten bedingter, alternativer oder paralleler Ausführungspfade erfolgt. Somit enthält die Zustandswissensbasis auch bei mehreren möglichen Programmausführungswegen stets ein Abbild aller alternativ möglichen Zustände und Bedingungen.

Dahingehend ist auch eine Weiterbildung von Vorteil, nach der die Bildung und/oder Aktualisierung der Zustandswissensbasis unter Einbeziehung der mit gegebenenfalls verwendeten bedingten Anweisungen verknüpften Bedingungen erfolgt. Diese explizit angegebenen Bedingungen liefern zusätzliche Informationen über die möglichen Maschinenzustände für die unter diesen Bedingungen ausgeführten Programminstruktionen, wodurch eine umfassendere Abbildung der Maschinenzustände in der Zustandswissensbasis erreicht wird.

Die Aufgabe der Erfindung betrifft auch eine Datenverarbeitungseinrichtung, welche zur Durchführung des erfindungsgemäßen Verfahrens ausgebildet ist.

Ferner betrifft die Erfindung auch eine Werkzeugmaschine, insbesondere eine Spritzgießmaschine, welche eine zustandsbasierte Ablaufsteuerung aufweist, auf der ein Ablaufprogramm ausgeführt wird, weiches mit dem erfindungsgemäßen Verfahren hergestellt wurde.

Zum besseren Verständnis der Erfindung wird diese anhand der nachfolgenden Figuren näher erläutert.

Es zeigen jeweils in stark schematisch vereinfachter Darstellung:
- Fig. 1: Ein schematisches Blockschaltbild der Komponenten des erfindungsgemäßen Verfahrens;
- Fig. 2: a) und b) eine bekannte Ablaufsteuerung zum Betrieb einer Sprühvorrichtung;
- Fig. 3: die erfindungsgemäße Ablaufsteuerung anhand des Beispiels der Sprühvorrichtung aus Fig. 1;
- Fig. 4: a) bis c) die Vorteile des erfindungsgemäßen Verfahrens bei der Erstellung einer Steueranweisung für die Ablaufsteuerung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

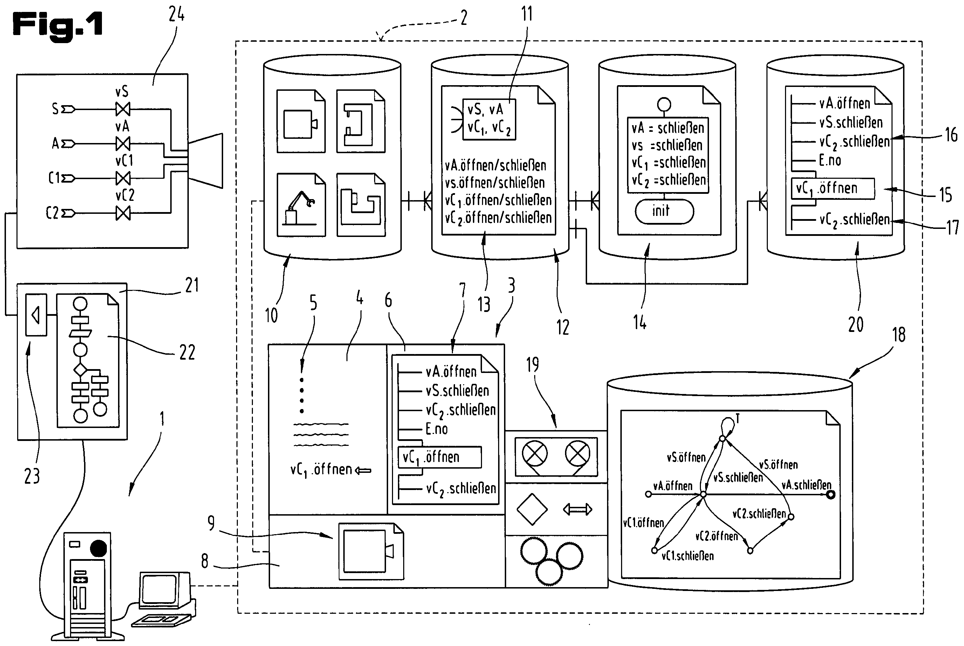

Fig. 1 zeigt das erfindungsgemäße Verfahren anhand eines schematisierten Blockschaltbildes.

Auf einer Datenverarbeitungseinrichtung 1 wird eine integrierte Entwicklungsumgebung (I-DE) 2 ausgeführt, wobei diese Entwicklungsumgebung bevorzugt in einem Speichermittel der Datenverarbeitungseinrichtung hinterlegt ist und die Programmcodeanweisungen der IDE von einem Programmcodeausführungsmittel der Datenverarbeitungseinrichtung 1 aus dem Speicher gelesen und anschließend ausgeführt werden, wobei über eine Mensch-Maschine-Schnittstelle (HMI) eine Interaktion mit dem Benutzer erfolgt. Insbesondere wird auf einem Ausgabegerät der Datenverarbeitungseinrichtung dem Benutzer das aktuell zu erstellende Ablaufprogramm zur Darstellung gebracht und insbesondere in einem Abschnitt des Ausgabegeräts die vielfältigen Unterstützungsmöglichkeiten des erfindungsgemäßen Verfahrens dem Benutzer zur Anzeige und Auswahl gebracht. Der Benutzer hat in vorteilhafter Weise somit stets das zu erstellende Ablaufprogramm für eine zustandsbasierte Ablaufsteuerung und die Unterstützungsausgaben der integrierten Entwicklungsumgebung vor Augen. Schematisch ist das in der Figur dadurch dargestellt, dass ein vereinfachtes Abbild 3 der Ausgabe der integrierten Entwicklungsumgebung dargestellt ist, welches drei Abschnitte aufweist, wobei in einem ersten Abschnitt 4 die Kommandos der Programminstruktionen 5 dargestellt werden, in einem zweiten Abschnitt 6 wird das Ergebnis einer Unterstützungsanforderung 7 dargestellt, und schließlich wird in einem dritten Abschnitt 8 die aktuelle, maschinenspezifische Konfiguration 9 dargestellt. Die hier dargestellte Anordnung der Abschnitte zeigt lediglich eine mögliche Ausführung der Unterstützung eines Benutzers bei der Erstellung einer Ablaufsteuerung, wobei die integrierte Entwicklungsumgebung das erfindungsgemäße Verfahren durchführt. Eine derartige integrierte Entwicklungsumgebung kann beispielsweise durch die sogenannte Eclipse-Entwicklungsumgebung gebildet sein, welche eine Rahmenstruktur bereitstellt, um das erfindungsgemäße Verfahren mit allen Regelwerken und Beziehungen aufnehmen, abbilden und durchführen zu können.

Um die integrierte Entwicklungsumgebung 2 parametrieren zu können, um dann ein Ablaufprogramm für eine zustandsbasierte Maschinensteuerung erstellen zu können, wird aus einem Speichermittel eine maschinenspezifische Konfiguration 10 in die integrierte Entwicklungsumgebung geladen, sodass diese nachfolgend für die spezifische Maschinensteuerung parametriert ist. Insbesondere umfasst die maschinenspezifische Konfiguration 10 all jene Bedingungen, Einstellungen und Parameter, die während der Entwicklung des Ablaufprogramms für die Maschinensteuerung gelten bzw. erfüllt sein müssen. So können im Speichermittel beispielsweise mehrere maschinenspezifische Konfigurationen hinterlegt sein, die bei Bedarf in die integrierte Entwicklungsumgebung 2 geladen werden und fortan bei der Entwicklung des Ablaufprogramms gelten. Beispielsweise kann eine Konfiguration für eine Werkzeugmaschine, für einen Manipulator oder für eine Sprühvorrichtung einer Lackierungseinrichtung hinterlegt sein und jeweils die ganz spezifischen Anforderungen der jeweiligen Einrichtung festlegen.

Der umschließende Rahmen mit dem Bezugszeichen 2 aus Figur 1 ist so zu interpretieren, dass die umschlossenen Komponenten zusammen die Entwicklungsumgebung bilden, obwohl die einzelnen Vereinbarungen und Bedingungsdefinitionen ggf. in unterschiedlichen Speichermitteln des Datenverarbeitungssystems hinterlegt sein können.

Eine maschinenspezifische Konfiguration weist zumindest eine maschinenspezifische Programmschnittstelle 11 auf, welche in einer Schnittstellenvereinbarung 12 hinterlegt ist. Insbesondere ist für die Schnittstellenvereinbarung 12 ferner ein maschinenspezifischer Befehlssatz 13 festgelegt, welcher jene Kommandos bzw. Programmsteuerinformationen enthält, die für diese spezifische Konfiguration zulässig bzw. verfügbar sind. Insbesondere werden je nach Maschinenkonfiguration bzw. je nach den verwendeten Maschinenkomponenten unterschiedliche Konfigurationsbibliotheken hinzugenommen werden, welche die Schnittstellen, Schnittstellenvereinbarungen und die verfügbaren Kommandos bereitstellen. Insbesondere legt die Schnittstellenvereinbarung 12 somit fest, welche Kommandos bei der Erstellung des Ablaufprogramms verfügbar und zulässig sind und ferner welche Schnittstellen, also welche Funktionsaufrufe, zur Kommunikation innerhalb des Ablaufprogramms und mit weiteren Modulen vorgesehen sind.

Weiters ist es möglich, dass zu einer einzelnen maschinenspezifischen Konfiguration, mehrere Schnittstellenvereinbarungen für unterschiedliche Maschinenkomponenten gehören.

Ferner ist noch ein Satz initialer Zustände und Zustandsbedingungen 14 hinterlegt, wobei es sich bei den initialen Zuständen um so genanntes gesichertes Wissen handelt, also um Informationen über die Maschinenzustände unmittelbar nach dem Einschalten der Maschine bzw. der Steuerung. Eine solche Information könnte bspw. sein, dass ein spezielles Initialisierungskommando, mit welchem die Maschine aus einem beliebigen Zustand in einen definierten Grundzustand gebracht wird, noch nicht ausgeführt wurde bzw. dass die Maschine noch nicht initialisiert wurde.

Für zumindest eines 15 der Kommandos des maschinenspezifischen Befehlssatzes 13 ist ein Satz von Vorbedingungen 16 und/oder ein Satz von Nachbedingungen 17 hinterlegt. Durch diese Vorbedingungen 16 lässt sich nun eindeutig festlegen, welche Erfordernisse gegeben sein müssen, bevor ein Kommando 15 ausgeführt werden kann. Nachbedingungen 17 sind gesichertes Wissen und Änderungsinformationen zum Zustand der Maschine und zum Steuerungsprogramm, d.h. welche Zustände und Bedingungen haben nach Ausführung dieses Kommandos Gültigkeit bzw. welche der vorher geltenden Bedingungen 16 und gesicherten Informationen werden nach Ausführung des Kommandos ungültig.

Von besonderer Bedeutung des erfindungsgemäßen Verfahrens ist, dass in der integrierten Entwicklungsumgebung 2 eine Zustandswissensbasis 18 aufgebaut wird, welche zumindest Teilen der Programminstruktionen 5 des Ablaufprogramms eine Zustandsinformation zuordnet, die direkt den Maschinenbetriebszuständen und ggf. weiteren gesicherten Informationen nach Ausführung des jeweiligen Kommandos bzw. der Programminstruktion entspricht. Als Maschinenzustände werden insbesondere auch interne Zustände der Ablaufsteuerung bzw. der Ablaufprogramms betrachtet. Insbesondere wird diese Zustandswissensbasis nach Änderung einer Programminstruktion aktualisiert und/oder neu gebildet, wobei diese Aktualisierung bzw. Bildung die initialen Zustände oder Zustandsbedingungen 14, die Vor- 16 und Nachbedingungen 17, sowie ggf. gewonnene Informationen aus der Verwendung von bedingt ausgeführten Anweisungen, Anweisungsblöcken oder Verzweigungen, sowie den maschinenspezifischen Befehlssatz 13 berücksichtig. Die Zustandswissensbasis 18 hält somit für jede Programmzeile bzw. für jede Programminstruktion ein umfassendes Abbild der jeweils möglichen Betriebszustände, ohne dass dafür eine physikalisch existierende Maschinensteuerung bzw. eine Maschine oder eine äquivalente Simulationsumgebung erforderlich wäre. Somit kann bereits während der Erstellung des Ablaufprogramms sichergestellt werden, dass das erstellte Ablaufprogramm jedenfalls den Anforderungen der Maschinensteuerung hinsichtlich Einhaltung der Betriebserfordernisse genügt. Insbesondere weist die integrierte Entwicklungsumgebung 2 dafür ein Aufzeichnungs- und Analysemodul 19 auf, welches permanent die Veränderungen am Quellcode des zu erstellenden Ablaufprogramms überwacht, aufzeichnet und analysiert, um basierend auf dem Regelwerk aus Schnittstellenvereinbarung 12, Zustandsbedingungen 14 und kommandospezifischer Bedingungen 20, für die jeweilige maschinenspezifische Konfiguration 10, etwaige Fehler sofort erkennen zu können und dem Benutzer einen entsprechenden Hinweis zu geben. Der Benutzer kann daher stets darauf vertrauen, ein semantisch korrektes Ablaufprogramm zu erstellen, und insbesondere bei Schwierigkeiten während der Erstellung, durch Auslösung einer Unterstützungsanforderung eine kommandobezogene Direkthilfe bzw. Entwicklungsunterstützung durch die integrierte Entwicklungsumgebung 2 zu bekommen.

Die Datenverarbeitungseinrichtung 1 kann direkt mit einer Maschinensteuerung 21 verbunden sein, um somit das erstellte Ablaufprogramm 22 direkt an die Maschinensteuerung zu übertragen, um dort vom Ausführungsmittel 23 abgearbeitet werden und somit die Maschinenkomponente 24 entsprechend den Programminstruktionen des Ablaufprogramms zu steuern. Das Ablaufprogramm 22 kann jedoch auch über einen Datenträger bzw. über ein Kommunikationsmittel an die Maschinensteuerung 21 übertragen werden.

Grundsätzlich ist es jedoch auch möglich und vorteilhaft, die Datenverarbeitungseinrichtung 1 direkt in die Maschinensteuerung 21 zu integrieren bzw. im Falle einer entsprechend leistungsfähigen und geeignet ausgebildeten Steuerungshardware die Entwicklungsumgebung 2 und das erfindungsgemäße Verfahren unmittelbar auf der Maschinensteuerung zu betreiben.

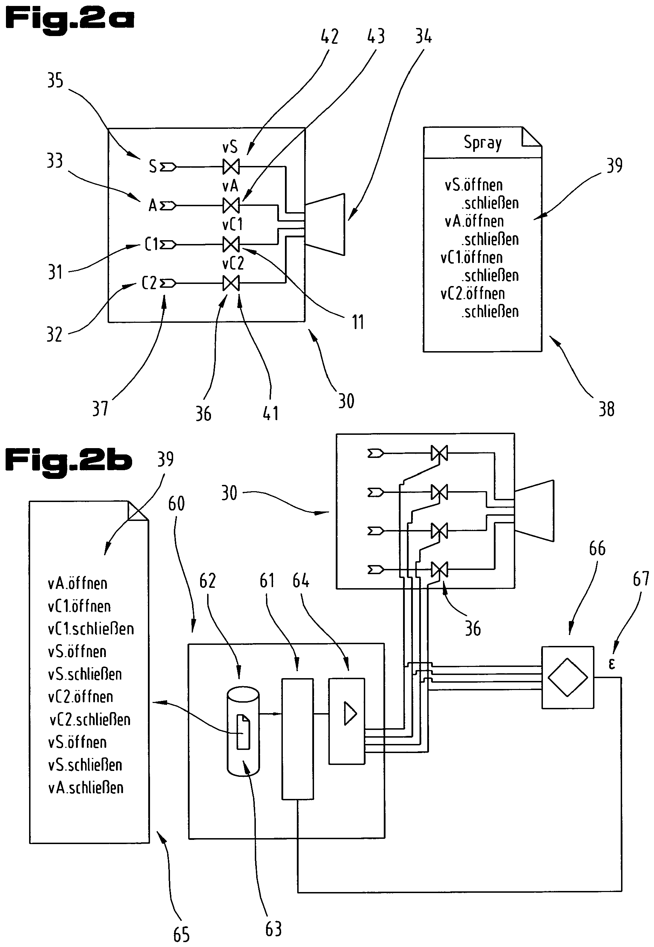

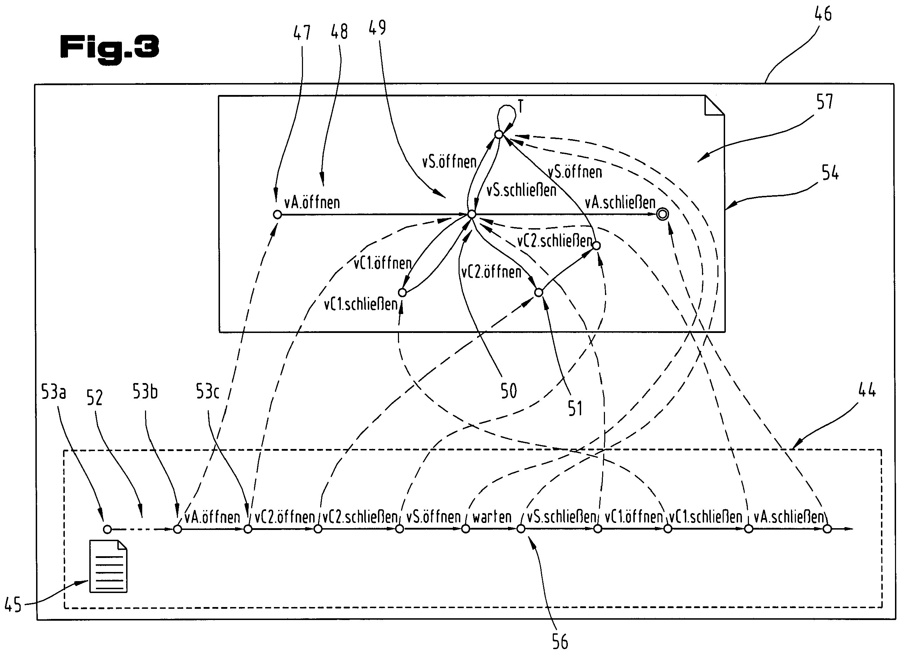

Die Fig. 2 und 3 zeigen anhand eines schematischen Beispiels einer Steuerung für eine Lackiervorrichtung einen Vergleich einer bekannten Ablaufsteuerung und einer Ablaufsteuerung, die ein Ablaufprogramm abarbeitet, welches mit dem erfindungsgemäßen Verfahren erstellt wurde. Zur Vereinfachung der Darstellung und Darlegung der wesentlichen Verbesserungen, sind die einzelnen Komponenten in Fig. 2 und Fig. 3 stark vereinfacht dargestellt.

Fig. 2a zeigt eine Sprühvorrichtung 30 die zum Auftragen zweier unterschiedlicher Farben ausgebildet ist. Dabei wird eine erste 31 oder zweite 32 Farbe mittels Druckluft 33 über eine Ausstoßdüse 34 auf ein Medium übertragen. Zur Reinigung der Ausstoßdüse, beispielsweise bei einem Farbwechsel oder nach Gebrauch, kann ferner auch ein Lösungsmittel 35 eingeleitet werden. Mittels steuerbarer Ventile 36 werden nun jeweils die erforderlichen Medienzuführungsleitungen 37 selektiv mit der Ausstoßdüse 34 verbunden.

Ein Steuerungsmodul 38 zum Betrieb der Sprühvorrichtung weist nun eine Mehrzahl von Steuerkommandos bzw. Steuerfunktionen 39 auf, um bei Abarbeitung dieser Steuerkommandos in einer Ablaufsteuerung, mittels entsprechender Wandler, spezifisch die einzelnen Ventile 36 anzusteuern. Einem Entwickler einer Ablaufsteuerung obliegt es nun, den korrekten Ablauf der einzelnen Steuerkommandos in der Ablaufsteuerung festzulegen, um so unerlaubte Betriebszustände zuverlässig auszuschließen. Da dem Entwickler bei der Erstellung der Ablaufsteuerung in jedem Ablaufschritt alle Steuerkommandos 39 eines Steuermoduls 38 zur Verfügung stehen, also insbesondere keine Prüfung des aktuellen Betriebszustand stattfindet, läuft der Entwickler insbesondere bei komplexen Ablaufsteuerungen Gefahr, Bedingungen bzw. gegenseitige Abhängigkeiten zwischen den Betriebszuständen und insbesondere zwischen mehreren Steuerungsmodulen zu verletzten. Da eine Ablaufsteuerung für ein komplexes Fertigungs- bzw. Betriebssystem zumeist eine Vielzahl unterschiedlichster Steuerungsmodule aufweisen wird, muss bei der Entwicklung sehr große Sorgfalt auf die Erfüllung und Beachtung der gegenseitigen Abhängigkeiten gelegt werden.

Zur Verhinderung ungültiger Betriebszustände wurde bislang zumeist zusätzlich ein parallel arbeitendes Sicherheitssystem entwickelt und mit der Ablaufsteuerung verknüpft, sodass fehlerhafte Betriebszustände verhindert werden und dadurch kein Schaden entstehen kann. Der Nachteil ist dabei, dass diese Systeme zumeist wiederum nur lokal begrenzt Betriebszustände überprüfen, ein ablaufsteuerungsübergreifendes Sicherheitskonzept ist zumeist wiederum nur durch Verknüpfung mehrerer Sicherheitssysteme möglich. Von entscheidendem Nachteil ist jedoch, dass ein Entwicklungsfehler der Ablaufsteuerung erst in der Abarbeitung der Ablaufsteuerung und somit im bestimmungsgemäßen Betrieb auftritt und somit die Fertigungs- bzw. Betriebsleiteinrichtung in einen Ausnahmezustand versetzt, indem der aufgetretene Fehler behoben werden muss. Insbesondere ist ein derartiger Fehlerfall zumeist mit Ausschussteilen und einer kostenintensiven Ausfallszeit und ggf. einer Reparatur verbunden.

Insbesondere bei Änderung bzw. Anpassung einer bestehenden Ablaufsteuerung besteht ferner die große Gefahr, dass sich eine geringfügige Änderung in einem Steuerungsmodul, aufgrund der ggf. weitläufigen gegenseitigen Abhängigkeiten in einem ablauftechnisch weit entfernten und somit vom Entwickler nicht berücksichtigten Steuerungsmodul auswirken kann und dort einen ungültigen Betriebszustand bewirkt.

Am Beispiel der Sprühvorrichtung 30 gibt es nun mehrere Bedingungen bzw. Einschränkungen, die in jedem Betriebszustand erfüllt sein müssen. Beispielsweise darf nur ein Farbventil 40, 41 gleichzeitig geöffnet sein und insbesondere darf ferner das Lösungsmittelventil 42 nicht gleichzeitig mit einem Farbventil 40, 41 geöffnet sein. Zum Aussprühen der Farbe bzw. des Lösungsmittels muss das Luftventil 43 geöffnet sein. Bei bisherigen Ablaufsteuerungen wurden derartige Erfordernisse bzw. gegenseitige Ausschlussbedingungen durch aufwändige Prüfverfahren bzw. Sicherheits-Kontrollsysteme bewerkstelligt. Im Gegensatz zum erfindungsgemäßen Verfahren Prüfen bzw. Überwachen derartige Kontrollsysteme die Ausführung des Ablaufprogramms erst zum Zeitpunkt der Ausführung, während das erfindungsgemäße Verfahren diese Prüfung bereits bei der Erstellung des Ablaufprogramms durchführt. Ein Sicherheitsprüfung während der Ausführung des Ablaufprogramms erfordert immer auch zusätzliche Ressourcen, insbesondere eine erhöhte Verarbeitungskapazität des Ausführungsmittels der Ablaufsteuerung, was neben erhöhten Kosten immer auch einen gesteigerten Energieverbrauch und somit auch eine gesteigerte Wärmeentwicklung mit sich zieht. Für Steuerungssysteme bspw. in der automatisierten Fertigung ist dies aber von Nachteil, weil dadurch die Erstellungs- und Betriebskosten steigen.

Ein weiterer Vorteil des erfindungsgemäßen Verfahrens liegt ferner darin, dass sehr viel mehr an Informationen über das Ablaufprogramm bekannt ist, insbesondere ist dessen komplette Struktur bekannt, während ein bekanntes Kontrollsystem nur die Ergebnisse von steuerungstechnischen Aktionen prüfen kann. Mit dem erfindungsgemäßen Verfahren lassen sich aber auch komplexe semantische Zusammenhänge überwachen, beispielsweise Verwendungsreihenfolgen, und dies insbesondere bereits bei der Entwicklung des Ablaufprogramms.

In Fig. 2b ist eine derartige konventionelle Ablaufsteuerung 60 dargestellt, die ein Ablaufanweisungs-Ausführungsmittel 61 aufweist, welches in einem Speichermittel 62 hinterlegte Steueranweisungen 63 abarbeitet und mittels entsprechender Wandler 64 die technische Vorrichtung ansteuert, hier die Ventile 36 der Sprühvorrichtung 30. Ein Detailablauf 65 der abzuarbeitenden Steueranweisung umfasst die in entsprechender Art aneinander gereihten Steuerkommandos 39, wobei es ausschließlich der Sorgfalt des Entwicklers obliegt, die Reihenfolge derart zu wählen, dass alle Bedingungen und Abhängigkeiten eingehalten werden. Bei einer bekannten Ablaufsteuerung wird daher zumeist ein Sicherheits-Kontrollsystem 66 vorhanden sein, welches die gegenseitigen Abhängigkeiten prüft und im Fehlerfall ein Fehlersignal 67 generiert, welches vom Ablaufanweisungs-Ausführungsmittel 61 ausgewertet wird und im Fehlerfall die weitere Ausführung der Steueranweisung 63, 65 unterbricht. Von Nachteil ist hier, dass ein Fehler in der Steueranweisung 63 erst bei der Ausführung durch das Ablaufanweisungs-Ausführungsmittel 61 auftritt, was unmittelbar zu einer Störung des Ablaufs und ggf. auch zu einer Produktionsunterbrechung führen kann.

Mit dem erfindungsgemäßen Verfahren wird nun ein Ablaufprogramm geschaffen, das eine Prüfung auf ungültige Betriebszustände implizit integriert hat, dass also stets alle Ablaufbedingungen bzw. Eingangs- und Ausgangsparameter eingehalten werden.

Fig. 3 zeigt im oberen Teil in Form eines gerichteten Graphen einen Protokollautomat 54. Der Protokollautomat 54 repräsentiert die möglichen und zulässigen Zustände und Zustandsübergänge für eine bestimmte Maschinenkomponente. Die Struktur des Protokollautomaten leitet sich aus der Schnittstellenvereinbarung für diese Maschinenkomponente ab. Insbesondere wird die Struktur aus den Vor- und Nachbedingungen gebildet, durch welche die zulässigen Aufrufreihenfolgen von Kommandos vorgegeben sind. Wenn eine Maschine aus mehreren Maschinenkomponenten besteht, so gibt es in der Wissensbasis für jede dieser Maschinenkomponenten einen solchen Protokollautomaten 54. Zur Vereinfachung der Beschreibung wird in der weiteren Beschreibung ein einzelner Protokollautomat mit einer Schnittstellenvereinbarung beschrieben, wobei bei mehreren vorhandenen Protokollautomaten bzw. mehreren Schnittstellenvereinbarungen, diese Beschreibung sinngemäß auf die weiteren Komponenten umzulegen ist.

Der Protokollautomat ist nur von den vorhandenen Maschinenkomponenten bzw. deren Schnittstellenvereinbarungen abhängig, nicht aber von der Implementierung des Ablaufprogramms 45. Jeder Zustandsübergang des Protokollautomaten entspricht einem Kommando gemäß der Schnittstellenvereinbarung dieser Maschinenkomponente. Ein derartiger Zustandsübergang wird in einer Darstellung eines gerichteten Graphen auch noch als Kante oder Transition bezeichnet.

Im unteren Teil der Fig. 3 ist wiederum als gerichteter Graph ein so genannter Implementierungsautomat 44 abgebildet. Der Implementierungsautomat 44 repräsentiert die Zustände und Zustandsübergänge die durch die Kommandos des erstellten Ablaufprogramms 45 vorgegeben sind. Jede Zustandsübergang des Implementierungsautomaten repräsentiert nun genau eine Programminstruktion des Ablaufprogramms 45.

Wesentlich ist nun, dass in der Zustandswissensbasis 46 Verknüpfungen zwischen den Zuständen und Zustandsübergängen des Implementierungsautomaten 44 und den Zuständen und Zustandsänderungen des Protokollautomaten 54 hergestellt werden. Während der Erstellung des Ablaufprogramms 45 wird von der Integrierten Entwicklungsumgebung bei jeder Programmänderung die Zustandswissensbasis 46, insbesondere der Implementierungsautomat 44 und dessen Verknüpfungen zum Protokollautomat 54 laufend aktualisiert. Dieser Zusammenhang ist in Fig. 3 durch die strichlierten Bezugslinien dargestellt. Jedem Zustand des Protokoll- 54 und Implementierungsautomaten 44 werden zusätzlich Informationen zugeordnet, die beispielsweise aus bestimmten Nachbedingungen der maschinenspezifischen Kommandos und/oder aus den Bedingungen von Verzweigungen oder bedingt ausgeführten Anweisungen oder Anweisungsblöcken resultieren. Beispielsweise sind dies IF-ELSE-Bedingungen, FOR-, WHILE- und DO UNTIL-Schleifen, ...; wobei zur Vereinfachung der Darstellung diese in der Figur nicht dargestellt sind.

Zu jeder Programmstelle lassen sich aus dem Implementierungsautomat 44 und den Verknüpfungen zum Protokollautomaten 54 die genauen Maschinenzustände und die zugeordneten zusätzlichen Informationen ermitteln. Insbesondere lassen sich aus den jeweiligen Zuständen des Protokollautomaten 54 die an einer bestimmten Programmstelle zulässigen Folgekommandos ermitteln. Grafisch ist das gut erkennbar, denn es handelt sich dabei um die von dem jeweiligen Zustand des Protokollautomaten 54 wegführenden Kanten. Solche zulässigen Folgekommandos können dann dem Benutzer von der IDE als Vorschlag im zur Auswahl angezeigt werden, bspw. im Rahmen einer vom Benutzer ausgelösten Unterstützungsanforderung.

Mittels aus dem Stand der Technik bekannten graphentechnischen Analyseverfahren lassen sich aus dem Implementierungsautomaten 44 und dem Protokollautomaten 54 unterschiedlichste Informationen zu den strukturellen Eigenschaften des gesteuerten Systems und des implementierten Anwendungsprogramms gewinnen, wie beispielsweise die Erreichbarkeit bestimmter Zustände, die verschiedenen möglichen Zustandsänderungen welche von einem bestimmten ersten Zustand zu einem bestimmten zweiten Zustand führen, oder welche zur Herbeiführung einer bestimmten sonstigen Bedingung führen, usw.. Solche Informationen können dann zur Ermittlung geeigneter Programmänderungen zur Beseitigung von Fehlern oder für das Herbeiführen eines bestimmten Maschinenzustands oder für den geeigneten Einbau bestimmter zusätzlicher Kommandos verwendet werden.

Beispielhaft dargestellt enthält die Zustandswissensbasis 46 einen ersten Betriebszustand 47, der im dargestellten Fall durch einen Ruhezustand der Sprühvorrichtung gekennzeichnet ist. Durch das Kommando 48 *vA.open* wird in der Zustandswissensbasis der zweiten Betriebszustand 49 festgelegt.

Der mit dem Bezugszeichen 48 gekennzeichnete Vorgang wird zur Vereinfachung als Kommando bezeichnet. Dies ist aber keine Programminstruktion im strengen Sinn, sondern die Repräsentation einer Programminstruktion innerhalb der Wissensbasis oder genauer eine Kante bzw. eine Zustandsänderung oder Zustandsübergang im Zustandsgraphen des Anwendungsprogramms. Durch die Ausführung des zugrunde liegenden Kommandos kommt es zum dargestellten Zustandsübergang.

Durch Ausführen des Kommandos 48 würde von der Maschinensteuerung das das Luftventil 43 geöffnet werden, wesentlich ist jedoch, dass bei Erreichen des zweiten Betriebszustands 49 dieses sicher und zuverlässig geöffnet ist. In diesem zweiten Betriebszustand 49, nun als erster Betriebszustand 50 wird beispielsweise das bedingte Kommando *vC2.open* ausgeführt und bringt den Protokollautomaten 54 so in den (neuen) zweiten Betriebszustand 51 der dadurch charakterisiert ist, dass bei der Ausführung des Ablaufprogramms durch die Maschinensteuerung, das Luftventil 43 und das zweite Farbventil 41 sicher geöffnet sind. Dadurch sind diese Vorbedingungen für das nachfolgende Kommando erfüllt. In diesem Betriebszustand wird nun die zweite Farbe mittels der Druckluft aus der Ausstoßdüse abgegeben und auf das zu beschichtende Medium übertragen. Diese bedingten Abläufe setzten sich nun durch das gesamte Ablaufprogramm 45 fort. Durch die Vor- und Nachbedingungen der Kommandos und die von der Entwicklungsumgebung mitgeführte und stetig aktualisierte Zustandswissensbasis 46 ist stets sichergestellt, dass bei Erreichen eines zweiten Betriebszustands alle erforderlichen Vorbedingungen zur Erreichung dieses Betriebszustands zuverlässig erfüllt sind, also dass ein Kommando nur dann vom Benutzer ausgewählt werden und somit verwendet werden kann, wenn an der einzufügenden Position des Ablaufprogramms alle semantischen Erfordernisse zur Verwendung dieses Kommandos erfüllt sind. Bei einer Unterstützungsanforderung werden dem Benutzer insbesondere nur jene Kommandos zur Auswahl angeboten, die an der einzufügenden Stelle zulässig sind, bzw. wird dem Benutzer eine Hilfestellung gegeben, wie eine bestehende Kommandofolge geändert werden muss, um ein semantisch korrektes Ablaufprogramm darzustellen.

Beispielsweise könnte im Ablaufprogramm 45 bei einer Programminstruktion bzw. einem Kommando 52 des korrespondierenden Implementierungsautomaten 44 bei einem Betriebszustand 56 ein Bediener eine Änderung vornehmen wollen. Durch Unachtsamkeit könnte der Bediener hier beispielsweise versuchen, eine Ablaufanweisung zum Öffnen des ersten Farbventils einzufügen. Aufgrund der Verknüpfung des Implementierungsautomaten 44 mit dem Protokollautomaten 54 kann von der Integrierten Entwicklungsumgebung und ggf. nach Auslösen einer Unterstützungsanforderung durch den Benutzer, eindeutig nachvollzogen werden, dass an der Stelle 56 der Steueranweisung 52 dieses Kommando nicht zulässig ist und wird somit eine entsprechende Warnmeldung ausgeben bzw. das Einfügen verhindern. Ferner können dem Benutzer Korrekturvorschläge dargestellt werden, die aufgrund der Zustandswissensbasis 46 und dem Regelwerk der Schnittstellenvereinbarung ermittelt werden, und dem Benutzer jene zusätzlichen Schritte zur Auswahl darstellen die notwendig sind, um die vom Benutzer geplante Änderung vornehmen zu können.

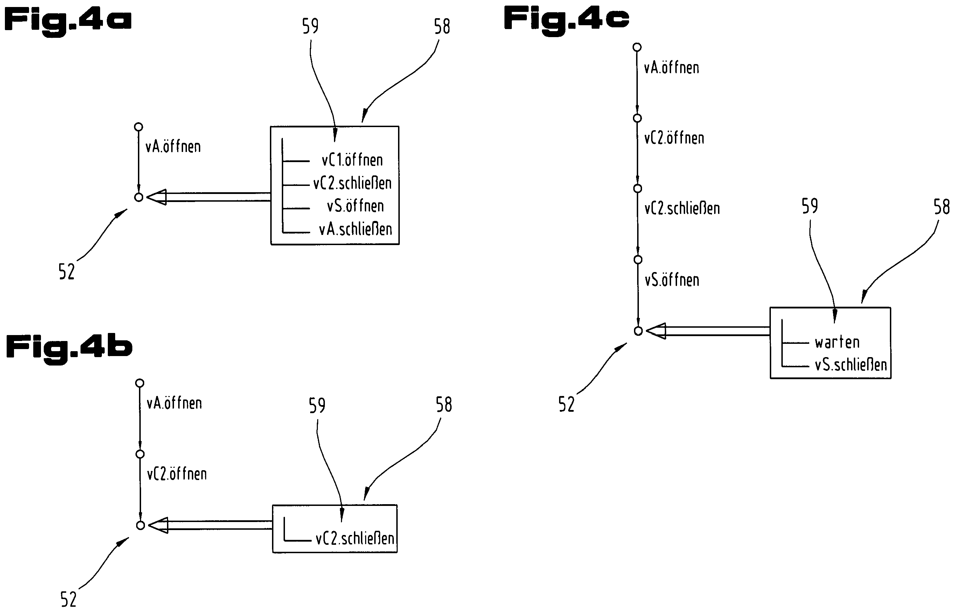

Fig. 4 a) bis c) zeigt diesbezüglich eine mögliche Unterstützung des Benutzers durch den Vorschlagsassistenten der Integrierten Entwicklungsumgebung. Fig. 4a zeigt beispielsweise den Vorschlagsassistent 58 nach der ersten Ablaufanweisung und damit nach dem ersten Betriebszustandswechsel zur Bildung des Ablaufprogramms 45 aus Fig. 3. Im Anschluss an die Instruktion zum Öffnen des Luftventils, befindet sich der Protokollautomat 54 in der Zustandswissensbasis 46 im zweiten Betriebszustand, gekennzeichnet durch das Bezugszeichen 49 in Fig. 3. An dieser Stelle sind gemäß den bedingten Kommandos 57 nur die vom Vorschlagsassistent 58 angebotenen Kommandos 59 zulässig. Der Bediener hat hier keine Möglichkeit eine ungültige bzw. nicht zugelassene Ablaufanweisung auszuwählen. Dieser Vorschlagsassistent 58 hat insbesondere den Vorteil, dass die angebotenen Kommandos nicht nur ausschließlich aufgrund der verfügbaren Kommandos der Schnittstellenvereinbarung ermittelt werden, sondern dass ferner die bisherigen Betriebszustände und alle relevanten Vor- und ggf. Nachbedingungen herangezogen werden, also die Vorgeschichte, aber auch gegebenenfalls bereits existierende nachfolgende Kommandofolgen des aktuell zu spezifizierenden Betriebszustandswechsel berücksichtig werden.

Fig. 4b zeigt das Kommando 52 nach einem weiteren spezifizierten Betriebszustandswechsel. In diesem Betriebszustand wird vom Vorschlagsassistenten 58 lediglich ein einziges Kommando 59 angeboten, da aufgrund der Bedingungen der Schnittstellenvereinbarung und der Zustandswissensbasis, nur diese eine Option möglich ist.

Fig. 4c zeigt die Situation nach weiteren spezifizierten Betriebszustandswechsel, wobei vom Vorschlagsassistent 58 wiederum nur die zulässigen Kommandos dargestellt werden.

Der besondere Vorteil des erfindungsgemäßen Verfahrens liegt also darin, dass bereits bei der Erstellung eines Ablaufprogramms für eine zustandsbasierte Maschinensteuerung, die Gültigkeit bzw. Zulässigkeit der Anreihung der Kommandos bzw. Programminstruktionen und die Einhaltung der global geltenden Richtlinien unmittelbar bei der Erstellung des Ablaufprogramms geprüft und sicher gestellt werden können, ohne dass dafür praktische Testläufe mit der Maschine oder simulierte Testläufe unter verschiedenen Betriebsbedingungen durchgeführt werden müssen. Von besonderer Bedeutung ist ferner, dass Sicherheits-Kontrollfunktionalität bereits ein integraler Bestandteil des Ablaufprogramms ist und somit ein zusätzliches Sicherheits-Kontrollsystem als physisch ausgebildetes Zusatzsystem oder als unterlagertes Softwaremodul erübrigt wird.

Die Ausführungsbeispiele zeigen mögliche Ausführungsvarianten des Verfahrens zur unmittelbaren und teilautomatischen Anwenderunterstützung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Verfahrens zur unmittelbaren und teilautomatischen Anwenderunterstützung, diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

**Bezugszeichenaufstellung**

| | | | |
|---|---|---|---|
| 1 | Datenverarbeitungseinrichtung | 41 | Zweites Farbventil |
| 2 | Integrierte Entwicklungsumgebung | 42 | Lösungsmittelventil |
| 3 | Abbild der IDE | 43 | Luftventil |
| 4 | Erster Abschnitt | 44 | Implementierungsautomat |
| 5 | Programminstruktionen | 45 | Ablaufprogramm |
| 6 | Zweiter Abschnitt | 46 | Zustandwissensbasis |
| 7 | Ergebnis einer Unterstützungsanforderung | 47 | Erster Betriebszustand |
| | | 48 | Kommando, Zustandsänderung |
| 8 | Dritter Abschnitt | 49 | Zweiter Betriebszustand |
| 9 | Maschinenspezifische Konfiguration | 50 | Erster Betriebszustand |
| 10 | Maschinenspezifische Konfiguration | | |
| | | 51 | Zweiter Betriebszustand |
| 11 | Maschinenspezifische Programmschnittstelle | 52 | Kommando, Programminstruktion |
| | | 53 | Betriebszustand |
| 12 | Schnittstellenvereinbarung | 54 | Protokollautomat |
| 13 | Maschinenspezifischer Befehlssatz | 55 | Zustandstabelle |
| 14 | Initiale Zustände und Zustandsbedingungen | | |
| | | 56 | Betriebszustand, Stell einer Änderung der Steueranweisung |
| 15 | Ein Kommando des maschinenspezifischen Befehlsatzes | | |
| | | 57 | Bedingtes Kommando bzw. Programminstruktion |
| 16 | Vorbedingungen | 58 | Vorschlagsassistent |
| 17 | Nachbedingungen | 59 | Kommando, Programminstruktion |
| 18 | Zustandswissensbasis | 60 | Ablaufsteuerung |
| 19 | Aufzeichnungs- und Analysemodul | | |
| 20 | Kommandospezifische Bedingungen | 61 | Ablaufanweisungs-Ausführungsmittel |
| 21 | Maschinensteuerung | 62 | Speichermittel |
| 22 | Ablaufprogramm | 63 | Steueranweisungen |
| 23 | Ausführungsmittel | 64 | Wandler |
| 24 | Maschinenkomponente | 65 | Detailablauf |
| 30 | Sprühvorrichtung | | |
| | | 66 | Sicherheits-Kontrollsystem |
| 31 | Erste Farbe | 67 | Fehlersignal |
| 32 | Zweite Farbe | | |
| 33 | Druckluft | | |
| 34 | Ausstoßdüse | | |
| 35 | Lösungsmittel | | |
| | | | |
| 36 | Ventile | | |
| 37 | Medienzuführungsleitungen | | |
| 38 | Steuerungsmodul | | |
| 39 | Steuerkommandos, Steuerfunktionen | | |
| | | | |
| 40 | Erstes Farbventil | | |

## Patentansprüche

1. Verfahren zur unmittelbaren und teilautomatischen Anwenderunterstützung bei der Erstellung, Abänderung und Prüfung eines Ablaufprogramms (45) zur späteren Ausführung des Ablaufprogramms (45) auf einer zustandsbasierten Maschinensteuerung (21), welches Verfahren auf einer integrierten Entwicklungsumgebung (2) einer elektronischen Datenverarbeitungseinrichtung (1) ausgeführt wird, wobei das Ablaufprogramm (45) durch Programminstruktionen (5) gebildet wird, die unter Einhaltung von Vorgaben für die semantisch korrekte Verwendung einer Menge von maschinenspezifischen Kommandos (15) ausgewählt werden,
**dadurch gekennzeichnet, dass**
für eine maschinenspezifische Konfiguration (9, 10) der integrierten Entwicklungsumgebung (2) und für zumindest eine maschinenspezifische Programmschnittstelle (11), eine Schnittstellenvereinbarung (12) in der integrierten Entwicklungsumgebung (2) hinterlegt wird,
wobei in der Schnittstellenvereinbarung (12)
- ein maschinenspezifischer Befehlssatz (13) mit mehreren Kommandos (15) hinterlegt wird, welcher Befehlssatz (13) die für das Ablaufprogramm (45) der Maschinensteuerung (21) steuerungstechnisch verfügbaren Operationen der Maschine enthält;
- ein Satz initialer Zustände und Zustandsbedingungen (14) hinterlegt wird, welche am Beginn der Ausführung des Ablaufprogramms (45) vorliegen beziehungsweise Gültigkeit haben,
- für zumindest eines der Kommandos (15) des maschinenspezifischen Befehlssatzes (13) ein Satz von Vorbedingungen für die Ausführung des Kommandos (15) hinterlegt wird, welche vor Ausführung des Kommandos (15) Gültigkeit haben;
- für zumindest eines der Kommandos (15) des maschinenspezifischen Befehlssatzes (13) einen Satz von Nachbedingungen hinterlegt wird, welche nach Ausführung des Kommandos (15) Gültigkeit haben;
und dass in der integrierten Entwicklungsumgebung (2) eine Zustandswissensbasis (46) aufgebaut wird, welche zumindest einer Teilmenge der Programminstruktionen (5) des Ablaufprogramms (45) eine Zustandsinformation über die nach planmäßiger Ausführung der jeweiligen Programminstruktion vorliegenden Maschinenzustände zuordnet,
wobei bei der Zuordnung der Vorbedingungen und Nachbedingungen zu einem Kommando (15), eine zulässige Ausführungsreihenfolge des Kommandos festgelegt wird,
und wobei die Zustandswissensbasis (46) nach einer Änderung einer Programminstruktion (5) aktualisiert oder neu gebildet wird, und diese Bildung und/oder Aktualisierung unter Einbeziehung
- der Abfolge der Programminstruktionen (5) im Ablaufprogramm (45),
- der den Kommandos (15) jeweils zugeordneten Vorbedingungen,
- der den Kommandos (15) jeweils zugeordneten Nachbedingungen,
erfolgt,
und ferner der Benutzer zumindest eine Programminstruktion (5) des Ablaufprogramms (45) als Bezugsbereich für eine Unterstützungsanforderung auswählt, und hernach die Unterstützungsanforderung auslöst,
wobei die integrierte Entwicklungsumgebung (2) unter Einhaltung der Vorgaben für die semantisch korrekte Verwendung der maschinenspezifischen Kommandos (15) im ausgewählten Bezugsbereich die Zustandswissensbasis (46) analysiert und aufbereitet und dem Benutzer das Ergebnis der Analyse auf einem Ausgabegerät dargestellt wird.

2. Verfahren nach Anspruch 1, **dadurch gekennzeichnet, dass** für zumindest ein Kommando (15) des maschinenspezifischen Befehlssatzes (13) als Nachbedingung die Aufhebung von zumindest einer Nachbedingung eines weiteren Kommandos (15) des maschinenspezifischen Befehlssatzes (13) bestimmt wird.

3. Verfahren nach Anspruch 1, **dadurch gekennzeichnet, dass** die Maschine funktional in mehrere im Wesentlichen eigenständig steuerbare Maschinenkomponenten gegliedert ist, wobei jeder Maschinenkomponente eine spezifische Komponentenprogrammschnittstelle zugeordnet wird, welche Komponentenprogrammschnittstellen jeweils jene Schnittstellenvereinbarungen umfassen, welche funktional der jeweiligen Maschinenkomponente zugeordnet sind, wobei die Gesamtheit der Komponentenprogrammschnittstellen die maschinenspezifische Programmschnittstelle (11) bildet.

4. Verfahren nach einem der Ansprüche 1 bis 3, **dadurch gekennzeichnet, dass** für die maschinenspezifische Konfiguration (9, 10) der integrierten Entwicklungsumgebung (2) weiters ein Satz von Beschränkungsregeln festgelegt wird, welche durch Verknüpfung von zumindest einer Teilmenge der im Programmlauf erfassbaren Eigenschaften zur Beschreibung der Maschinenzustände gebildet werden und solche logisch auswertbaren Bedingungen beschreiben, welche im ordnungsgemäßen und sicheren Betriebsfall der Maschine zu jeder Zeit Gültigkeit haben müssen, oder solche Bedingungen beschreiben, welche zu keiner Zeit zutreffen dürfen, dass die den Programminstruktionen (5) zugeordneten Zustandsinformationen hinsichtlich der Einhaltung der Beschränkungsregeln nach einer planmäßigen Ausführung der jeweiligen Programminstruktion und/oder nach der planmäßigen Ausführung von weiteren hinterlegten Kommandos (15) des maschinenspezifischen Befehlssatzes (13) geprüft werden und die Ergebnisse der Überprüfung der Zustandswissensbasis (46) zugefügt, insbesondere der jeweiligen Programminstruktion (5) zugeordnet werden.

5. Verfahren nach einem der Ansprüche 1 bis 4, **dadurch gekennzeichnet, dass** dem Benutzer als Ergebnis der Unterstützungsanforderung jene Programminstruktionen (5) dargestellt werden, für welche eine Vorbedingung oder eine gegebenenfalls festgelegte Beschränkungsregel verletzt wird.

6. Verfahren nach Anspruch 5, **dadurch gekennzeichnet, dass** an der integrierten Entwicklungsumgebung (2) die Auswahl des Bezugsbereiches durch Positionieren eines Cursors oder durch Anklicken einer Stelle innerhalb einer Darstellung der Programminstruktionen (5) des Ablaufprogramms (45) erfolgt, wobei der Bezugsbereich automatisch auf gegebenenfalls vorhandene vor- und nachgelagerte Programminstruktionen (5) des selben logisch zusammengehörenden Programmabschnitts ausgedehnt wird.

7. Verfahren nach Anspruch 5 oder 6, **dadurch gekennzeichnet, dass** jene Programminstruktionen (5), für welche Vorbedingungen oder gegebenenfalls festgelegte Beschränkungsregeln verletzt werden, von der integrierten Entwicklungsumgebung (2) am Ausgabegerät in einem separaten Ausgabefenster aufgelistet werden und durch Auswahl eines Listeneintrags die jeweils zugeordnete Stelle bzw. Programminstruktion (5) des Ablaufprogramms (45) aufgerufen und dargestellt wird.

8. Verfahren nach einem der Ansprüche 1 bis 7, **dadurch gekennzeichnet, dass** von der integrierten Entwicklungsumgebung (2) dem Benutzer, nach Auswahl des Bezugsbereich und nach dem Auslösen der Unterstützungsanforderung, die an der gewählten Stelle möglichen Maschinenzustände am Ausgabegerät in einem Schaubild, insbesondere in einem animierten Schaubild, dargestellt werden.

9. Verfahren nach Anspruch 8, **dadurch gekennzeichnet dass** beim Vorliegen mehrerer für den ausgewählten Bezugsbereich alternativ möglicher Zustandsszenarien, die integrierte Entwicklungsumgebung (2) am Ausgabegerät dem Benutzer eine Auswahlmöglichkeit zum Wechsel der Darstellung zwischen den möglichen Zustandsszenarien bereit stellt.

10. Verfahren nach einem der Ansprüche 1 bis 9, **dadurch gekennzeichnet, dass** die integrierte Entwicklungsumgebung (2) dem Benutzer als Ergebnis der Unterstützungsanforderung eine Liste von maschinenspezifische Kommandos (15) ermittelt und am Ausgabegerät dargestellt, für welche Kommandos (15) in einem vom Benutzer ausgewählten Bezugsbereich sowohl die Vorbedingungen zu deren Ausführung überprüft wurden und erfüllt sind als auch nach deren planmäßiger Ausführung alle gegebenenfalls festgelegten Beschränkungsregeln eingehalten werden.

11. Verfahren nach einem der Ansprüche 1 bis 10, **dadurch gekennzeichnet, dass** der Benutzer zur Auslösung einer Unterstützungsanforderung ein Kommando aus einer dargestellten Liste von Kommandos (15) auswählt und von der integrierten Entwicklungsumgebung (2) dem Benutzer als Ergebnis der Unterstützungsanforderung mögliche Einfügestellen im Bezugsbereich des Ablaufprogramms (45) ermittelt und am Ausgabegerät dargestellt werden, an welchen für das gewählte Kommando an der jeweiligen Einfügestelle sowohl alle Vorbedingungen zur Ausführung erfüllt sind, als auch nach dessen planmäßiger Ausführung alle gegebenenfalls festgelegten Beschränkungsregeln eingehalten werden.

12. Verfahren nach Anspruch 5 oder 6, **dadurch gekennzeichnet, dass** der Benutzer einen Bezugsbereich auswählt, welcher mindestens eine Programminstruktion (5) aufweist, für welche eine Vorbedingung oder eine gegebenenfalls festgelegte Beschränkungsregel verletzt wird und durch die integrierte Entwicklungsumgebung (2) als Unterstützungsanforderung für den Benutzer zumindest ein Korrekturvorschlag für das Ablaufprogramm (45) generiert wird, dessen Anwendung zur Einhaltung der Vorbedingungen und der gegebenenfalls festgelegten Beschränkungsregeln für alle Programminstruktionen (5) im Bezugsbereich führt, wobei der Korrekturvorschlag eine oder mehrere der Operationen aus Einfügen, Entfernen und Verschieben von Kommandos (15) umfasst, die zufolge des Korrekturvorschlags vorgesehenen Änderungen dem Benutzer durch die integrierten Entwicklungsumgebung (2) in einer Voransicht zumindest überblicksartig oder zusammenfassend dargestellt werden und die vorgesehenen Änderungen am Ablaufprogramm (45) nach einer erfolgten Bestätigung durch den Benutzer automatisch von der integrierten Entwicklungsumgebung (2) vorgenommen werden.

13. Verfahren nach Anspruch 12, **dadurch gekennzeichnet, dass** zwei oder mehr alternative Korrekturvorschläge ermittelt werden, welche dem Benutzer am Ausgabegerät zur Auswahl für die Voransicht der jeweiligen Änderungen dargestellt werden, wobei ferner für die Korrekturvorschläge jeweils ein Aufwandsmaß ermittelt wird, welches durch die Anzahl und Art der vorgesehenen Änderungen bestimmt ist, und dem Benutzer das ermittelte Aufwandsmaß zu jedem Korrekturvorschlag dargestellt und/oder die Darstellungsreihenfolge der Korrekturvorschläge zur Auswahl für die Voransicht entsprechend dem jeweiligen Aufwandsmaß angepasst erfolgt.

14. Verfahren nach einem der Ansprüche 1 bis 13, **dadurch gekennzeichnet, dass** der Benutzer einen Bezugsbereich mit mindestens einer möglichen Einfügestelle für Programminstruktionen (5) auswählt und ferner ein oder mehrere Kommandos (15) in einer Auswahlliste selektiert und durch die integrierte Entwicklungsumgebung (2) als Unterstützungsanforderung für den Benutzer ein Erweiterungsvorschlag für das Ablaufprogramm (45) generiert wird, durch dessen Anwendung alle selektierten Kommandos unter Einhaltung der Vorbedingungen und der gegebenenfalls vorgesehenen Beschränkungsregeln in das vorbestehende Ablaufprogramm integriert werden, insbesondere in den Bezugsbereich, und die zufolge des Erweiterungsvorschlags vorgesehenen Änderungen dem Benutzer in einer Voransicht zumindest überblicksartig oder zusammenfassend dargestellt werden und die vorgesehenen Änderungen am Ablaufprogramm (45) nach einer erfolgten Bestätigung durch den Benutzer von der integrierten Entwicklungsumgebung (2) automatisch vorgenommen werden.

15. Verfahren nach Anspruch 14, **dadurch gekennzeichnet, dass** die vom Benutzer für die Erweiterung selektierten Kommandos von der integrierten Entwicklungsumgebung (2) automatisch durch weitere Kommandos (15) aus dem maschinenspezifischen Befehlssatz (13) ergänzt werden, welche zur Einhaltung der Vorbedingungen und der gegebenenfalls vorgesehenen Beschränkungsregeln benötigt werden.

16. Verfahren nach einem der Ansprüche 14 oder 15, **dadurch gekennzeichnet, dass** von der integrierten Entwicklungsumgebung (2) zusätzlich zu dem einen Erweiterungsvorschlag ein oder mehrere alternative Erweiterungsvorschläge generiert werden, welche dem Benutzer zur Auswahl für die Voransicht der jeweiligen Erweiterungen am Ausgabegerät dargestellt werden.

17. Verfahren nach Anspruch 16, **dadurch gekennzeichnet, dass** für die generierten Erweiterungsvorschläge durch die integrierte Entwicklungsumgebung (2) jeweils ein Aufwandsmaß ermittelt wird, welches durch die Anzahl und Art der vorgesehenen Erweiterungen bestimmt ist, und dem Benutzer das ermittelte Aufwandsmaß zu jedem Erweiterungsvorschlag dargestellt wird, wobei die Darstellungsreihenfolge der Erweiterungsvorschläge zur Auswahl für die Voransicht entsprechend dem jeweiligen Aufwandsmaß erfolgt.

18. Verfahren nach einem der Ansprüche 1 bis 17, **dadurch gekennzeichnet, dass** in der Schnittstellenvereinbarung (12) ein Satz von, während der Ausführung des Ablaufprogramms (45) durch die Maschinensteuerung (21), erfassbaren Betriebszuständen, insbesondere von Statusinformationen, oder ausgelösten Ereignissen, hinterlegt wird.

19. Verfahren nach einem der Ansprüche 1 bis 18, **dadurch gekennzeichnet, dass** die Bildung und/oder Aktualisierung der Zustandswissensbasis (46) unter Einbeziehung der gegebenenfalls festgelegten initialen Zustände und Zustandsbedingungen, oder unter Einbeziehung von gegebenenfalls vorhandenen Verzweigungen und Zusammenführungspunkten bedingter, alternativer oder paralleler Ausführungspfade, erfolgt.

20. Verfahren nach einem der Ansprüche 1 bis 19, **dadurch gekennzeichnet, dass** die Bildung und/oder Aktualisierung der Zustandswissensbasis (46) unter Einbeziehung der mit gegebenenfalls verwendeten bedingten Anweisungen verknüpften Bedingungen erfolgt.

21. Datenverarbeitungseinrichtung umfassend ein Speichermittel, ein Programmcode-Ausführungsmittel und ein Ausgabegerät, **dadurch gekennzeichnet, dass** die Datenverarbeitungseinrichtung zur Durchführung eines Verfahrens nach einem der Ansprüche 1 bis 20 ausgebildet ist.

22. Werkzeugmaschine umfassend eine zustandsbasierte Ablaufsteuerung, **dadurch gekennzeichnet, dass** die Ablaufsteuerung zur Durchführung eines Ablaufprogramms ausgebildet ist, wobei das Ablaufprogramm nach einem Verfahren gemäß der Ansprüche 1 bis 20 gebildet wurde.

## Claims

1. A method for directly and partially automatically supporting users in creating, changing, and testing a sequence program (45) for subsequent execution of the sequence program (45) on a state-based machine controller (21), said method being executed in an integrated development environment (2) of an electronic data processing device (1), the sequence program (45) being formed by program instructions (5), which are selected in compliance with specifications for the semantically correct use of a number of machine-specific commands (15),
**characterised in that**
for a machine-specific configuration (9, 10) of the integrated development environment (2) and for at least one machine-specific program interface (11), an interface agreement (12) is stored in the integrated development environment (2), wherein, in the interface agreement (12),
- a machine-specific command set (13) having multiple commands (15) is stored, said command set (13) containing the operations of the machine which are available in control terms for the sequence program (45) of the machine controller (21);
- a set of initial states and state conditions (14) is stored, which are present and valid at the start of execution of the sequence program (45);
- for at least one of the commands (15) of the machine-specific command set (13), a set of preconditions for executing the command (15) is stored, which are valid before the command (15) is executed;
- for at least one of the commands (15) of the machine-specific command set (13), a set of postconditions is stored, which are valid after the command (15) is executed;
and a state knowledge base (46) is constructed in the integrated development environment (2), said state knowledge base assigning an item of state information, relating to the machine states present after the respective program instruction is executed as planned, to at least a portion of the program instructions (5) of the sequence program (45),
wherein, when the preconditions and postconditions are assigned to a command (15), a permissible execution order of the command is defined,
and wherein, after a program instruction (5) is changed, the state knowledge base (46) is updated or regenerated, and this regeneration and/or update takes place including
- the order of the program instructions (5) in the sequence program (45),
- the preconditions assigned to each command (15),
- the postconditions assigned to each command (15),
and furthermore, the user selects at least one program instruction (5) of the sequence program (45) as the reference range for a support request, and then triggers the support request,
wherein the integrated development environment (2) analyses and processes the state knowledge base (46) within the selected reference range, in compliance with the specifications for the semantically correct use of the machine-specific commands (15), and displays the result of the analysis to the user on an output device.

2. The method according to claim 1, **characterised in that** for at least one command (15) of the machine-specific command set (13), the suspension of at least one postcondition of a further command (15) of the machine-specific command set (13) is defined as the postcondition.

3. The method according to claim 1, **characterised in that** the machine is functionally divided into multiple machine components which can be controlled in a substantially independent manner, wherein each machine component is assigned a specific component program interface, said component program interfaces each comprising the interface agreements which are functionally assigned to the respective machine components, wherein the entirety of the component program interfaces forms the machine-specific program interface (11).

4. The method according to any one of claims 1 to 3, **characterised in that** for the machine-specific configuration (9, 10) of the integrated development environment (2), a set of constraint rules is also defined, which are formed by linking at least one portion of the properties, which can be detected while the program is running, for describing the machine states and describe conditions which can be logically evaluated and must be valid at all times during proper and secure operation of the machine or describe conditions which must not apply at any time such that the items of state information assigned to the program instructions (5) are checked for compliance with the constraint rules after the respective program instruction is executed as planned and/or after further stored commands (15) of the machine-specific command set (13) are executed as planned, and the results of the check are added to the state knowledge base (46), in particular assigned to the respective program instruction (5).

5. The method according to any one of claims 1 to 4, **characterised in that** as the result of the support request, the user is shown the program instructions (5) for which a precondition or any defined constraint rule is violated.

6. The method according to claim 5, **characterised in that** in the integrated development environment (2), the selection of the reference range is made by positioning a cursor or by clicking on a point within a display of the program instructions (5) of the sequence program (45), wherein the reference range is automatically expanded to any previous and subsequent program instructions (5) of the same logically coherent program section.

7. The method according to claim 5 or 6, **characterised in that** the program instructions (5) for which preconditions or any defined constraint rules are violated are listed on the output device in a separate output window from the integrated development environment (2), and the respectively assigned point or program instruction (5) in the sequence program (45) is retrieved and displayed by selection of a list entry.

8. The method according to any one of claims 1 to 7, **characterised in that** after the reference range has been selected and the support request has been triggered, the integrated development environment (2) displays the possible machine states at the selected point to the user on the output device in a diagram, in particular an animated diagram.

9. The method according to claim 8, **characterised in that** when multiple alternatively possible state scenarios are present for the selected reference range, the integrated development environment (2) provides the user with a selection option for changing the display between the possible state scenarios on the output device.

10. The method according to any one of claims 1 to 9, **characterised in that** as the result of the support request, the integrated development environment (2) determines and displays to the user on the output device a list of machine-specific commands (15), for which commands (15) the preconditions for executing said commands have been checked and are met, and any defined constraint rules have been complied with after said commands have been executed as planned, within a reference range selected by the user.

11. The method according to any one of claims 1 to 10, **characterised in that** to trigger a support request, the user selects a command from a displayed list of commands (15), and possible insertion points within the reference range of the sequence program (45) are determined by the integrated development environment (2) as the result of the support request and displayed to the user on the output device, at which insertion points, for the selected command, at the respective insertion point, all the preconditions for executing said command are met, and any defined constraint rules are complied with after said command has been executed as planned.

12. The method according to claim 5 or 6, **characterised in that** the user selects a reference range which has at least one program instruction (5) for which a precondition or any defined constraint rule is violated, and the integrated development environment (2), as a support request for the user generates at least one correction suggestion for the sequence program (45), the application of which results in compliance with the preconditions and with any defined constraint rules for all the program instructions (5) within the reference range, wherein the correction suggestion comprises one or more of the operations of inserting, removing and moving commands (15); the changes intended as a result of the correction suggestion are shown to the user by the integrated development environment (2) in a preview, at least in overview or summary form; and the intended changes are automatically performed by the integrated development environment (2) on the sequence program (45) after confirmation by the user.

13. The method according to claim 12, **characterised in that** two or more alternative correction suggestions are determined, which are displayed to the user on the output device for selection for the preview of the respective changes, wherein an amount of effort, which is defined by the number and type of intended changes, is also determined for each of the correction suggestions, and the determined amount of effort is displayed to the user for each correction suggestion and/or the display order of the correction suggestions for selection for the preview is adjusted according to the respective amount of effort.

14. The method according to any one of claims 1 to 13, **characterised in that** the user selects a reference range with at least one possible insertion point for program instructions (5) and also selects one or more commands (15) in a selection list, and the integrated development environment (2) generates, as a support request for the user, a addition suggestion for the sequence program (45), the application of which integrates all the selected commands into the pre-existing sequence program, in particular into the reference range, in compliance with the preconditions and any provided constraint rules, and the changes intended as a result of the addition suggestion are displayed to the user in a preview at least in overview or summary form, and the intended changes are performed automatically on the sequence program (45) by the integrated development environment (2) after confirmation by the user.

15. The method according to claim 14, **characterised in that** the commands selected by the user for addition are automatically complemented by the integrated development environment (2) with further commands (15) from the machine-specific command set (13) which are necessary to comply with the preconditions and any provided constraint rules.

16. The method according to one of claims 14 or 15, **characterised in that** in addition to the one addition suggestion, the integrated development environment (2) generates one or more alternative addition suggestions, which are displayed to the user on the output device for selection for the preview of the respective additions.

17. The method according to claim 16, **characterised in that** an amount of effort, which is defined by the number and type of intended additions, is determined by the integrated development environment (2) for each of the generated addition suggestions, and the determined amount of effort is displayed to the user for each addition suggestion, wherein the display order of the addition suggestions for selection for the preview corresponds to the respective amount of effort.

18. The method according to any one of claims 1 to 17, **characterised in that** a set of operating states, in particular status information, which can be detected during execution of the sequence program (45) by the machine controller (21) or of triggered events is stored in the interface agreement (12).

19. The method according to any one of claims 1 to 18, **characterised in that** the state knowledge base (46) is generated and/or updated including any defined initial states and state conditions or including any branches and merging points of conditional, alternative or parallel execution paths.

20. The method according to any one of claims 1 to 19, **characterised in that** the state knowledge base (46) is generated and/or updated including the conditions linked with any conditional instructions used.

21. A data processing device comprising a storage means, a program code execution means and an output device, **characterised in that** the data processing device is configured to carry out a method according to any one of claims 1 to 20.

22. A machine tool comprising a state-based sequential control system, **characterised in that** the sequential control system is configured to carry out a sequence program, wherein the sequence program was formed using a method according to any one of claims 1 to 20.

## Revendications

1. Procédé d'assistance directe et partiellement automatique d'utilisateurs lors de la création, de la modification et du contrôle d'un programme séquentiel (45) pour l'exécution ultérieure du programme séquentiel (45) sur une commande de machine basée sur l'état (21), ce procédé étant exécuté dans un environnement de développement intégré (2) d'un dispositif de traitement de données informatique (1), le programme séquentiel (45) étant constitué d'instructions de programme (5) qui sont sélectionnées en respectant des conditions pour l'utilisation sémantiquement correcte d'une quantité de commandes spécifiques à la machine (15),
**caractérisé en ce que**
pour une configuration spécifique à la machine (9, 10) de l'environnement de développement intégré (2) et pour au moins une interface de programme spécifique à la machine (11), un accord d'interface (12) est enregistré dans l'environnement de développement intégré (2), moyennant quoi, dans l'accord d'interface (12),
- est enregistré un jeu d'instructions spécifiques à la machine (13) avec plusieurs commandes (15), ce jeu d'instructions (13) contenant les opérations de la machine disponibles pour le contrôle du programme séquentiel (45) de la commande de la machine (21) ;
- est enregistré un jeu d'états initiaux et de conditions d'état (14), qui existent ou sont valables au début de l'exécution du programme séquentiel (45),
- pour au moins une des commandes (15) du jeu d'instructions spécifiques à la machine (13), est enregistré un jeu de pré-conditions pour l'exécution de la commande (15), qui sont valables avant l'exécution de la commande (15) ;
- pour au moins une des commandes (15) du jeu d'instructions spécifiques à la machine (13), est enregistré un jeu de post-conditions, qui sont valables après l'exécution de la commande (15) ;
et **en ce que**, dans l'environnement de développement intégré (2), une base de connaissance d'état (46) est établie, qui attribue, à au moins une partie des instructions (5) du programme séquentiel (45), une information d'état concernant les états de la machine existant après l'exécution planifiée de l'instruction de programme correspondante,
moyennant quoi, lors de l'attribution des pré-conditions et des post-conditions à une commande (15), une séquence d'exécution admissible de la commande est déterminée, et la base de connaissances d'état (46) est actualisée ou établie à nouveau après une modification d'une instruction (5) et cette formation et/ou actualisation a lieu en tenant compte
- de l'ordre des instructions (5) dans le programme séquentiel (45),
- des pré-conditions attribuées aux commandes (15),
- des post-conditions attribuées aux commandes (15),
et en outre l'utilisateur sélectionne au moins une instruction (5) du programme séquentiel (45) en tant que zone de référence pour une demande d'assistance et déclenche ensuite la demande d'assistance,
l'environnement de développement intégré (2) analysant et traitant la base de connaissances d'état (46) dans la zone de référence sélectionnée en respectant les directives pour l'utilisation sémantiquement correcte des commandes spécifiques à la machine (15),
et le résultat de l'analyse étant affiché pour l'utilisateur sur un appareil de sortie.

2. Procédé selon la revendication 1, **caractérisé en ce que**, pour au moins une commande (15) du jeu d'instructions spécifiques à la machine (13), en tant que post-condition, la suppression d'au moins une post-condition d'une autre commande (15) du jeu d'instructions spécifiques à la machine (13) est déterminée.

3. Procédé selon la revendication 1, **caractérisé en ce que** la machine est divisée fonctionnellement en plusieurs composants pouvant être contrôlés de manière globalement indépendante, une interface de programme de composant spécifique étant attribuée à chaque composant de la machine, ces interfaces de composants comprenant chacune des accords d'interfaces qui sont attribuées de manière fonctionnelle au composant de machine concerné, l'ensemble des interfaces de programme de composants constituant l'interface de programme spécifique à la machine (11).

4. Procédé selon l'une des revendications 1 à 3, **caractérisé en ce que**, pour la configuration spécifique à la machine (9, 10) de l'environnement de développement intégré (2), un jeu de règles de limitations est en outre déterminé, qui sont constituées de la combinaison d'au moins une partie des propriétés mesurables dans le déroulement du programme pour la description des états de la machine, et qui décrivent les conditions analysables logiquement qui doivent être valides à tout moment dans le fonctionnement correct et sûr de la machine, ou décrivent les conditions qui ne doivent apparaître à aucun moment, **en ce que** les informations d'états attribuées aux instructions (5) sont contrôlées en ce qui concerne le respect des règles de limitations après une exécution planifiée de l'instruction concernée et/ou après l'exécution planifiée d'autres commandes (15) enregistrées du jeu d'instructions spécifique à la machine (13) et les résultats de contrôle sont ajoutés à la base de connaissances d'états (46), plus particulièrement attribués à l'instruction (5) concernée.

5. Procédé selon l'une des revendications 1 à 4, **caractérisé en ce que** les instructions (5) pour lesquelles une pré-condition ou une règle de limitation, déterminée le cas échéant, est enfreinte, sont affichées à l'attention de l'utilisateur en tant que résultat de la demande d'assistance.

6. Procédé selon la revendication 5, **caractérisé en ce que**, au niveau de l'environnement de développement intégré (2), la sélection de la zone de référence a lieu pour le positionnement d'un curseur ou en cliquant à un endroit à l'intérieur d'une représentation des instructions (5) du programme séquentiel (45), la zone de référence étant automatiquement étendue aux instructions (5), placées le cas échéant avant et après dans la même portion de programme logique.

7. Procédé selon la revendication 5 ou 6, **caractérisé en ce que** les instructions (5) pour lesquelles des pré-conditions ou des règles de limitations, déterminées le cas échéant, sont listées par l'environnement de développement intégré (2) sur l'appareil de sortie dans une fenêtre de sortie séparée et l'emplacement ou l'instruction (5) du programme séquentiel (45) correspondante est appelée et affichée par sélection d'une entrée de la liste.

8. Procédé selon l'une des revendications 1 à 7, **caractérisé en ce que** les états de la machine possibles à l'emplacement sélectionné sont affichés sur l'appareil de sortie dans un graphique, plus particulièrement dans un graphique animé, par l'environnement de développement intégré (2) à l'attention de l'utilisateur après sélection de la zone de référence et après le déclenchement de la demande d'assistance.

9. Procédé selon la revendication 8, **caractérisé en ce que**, dans le cas de l'existence de plusieurs scénarios d'états possibles en variante pour la zone de référence sélectionnée, l'environnement de développement intégré (2) met à la disposition de l'utilisateur, sur l'appareil de sortie, une possibilité de sélection pour le changement de la représentation entre les scénarios d'états possibles.

10. Procédé selon l'une des revendications 1 à 9, **caractérisé en ce que** l'environnement de développement intégré (2) détermine et représente sur l'appareil de sortie, à l'attention de l'utilisateur, en tant que résultat de la demande d'assistance, une liste de commandes spécifiques à la machine (15), moyennant quoi, pour ces commandes (15), dans une zone de référence sélectionnée par l'utilisateur, aussi bien les pré-conditions pour leur exécution ont été contrôlées et sont satisfaites et, après leur exécution planifiée, toutes les règles de limitations fixées le cas échéant sont respectées.

11. Procédé selon l'une des revendications 1 à 10, **caractérisé en ce que** l'utilisateur sélectionne, pour le déclenchement d'une demande d'assistance, une commande dans une liste représentée de commandes (15) et l'environnement de développement intégré (2) détermine et représente, sur l'appareil de sortie, à l'attention de l'utilisateur, en tant que résultat de la demande d'assistance, les emplacements d'insertion possibles dans la zone de référence du programme séquentiel (45), au niveau desquels, pour la commande sélectionnée au niveau de l'emplacement d'insertion concerné, toutes les pré-conditions pour l'exécution sont satisfaites et, après leur exécution planifiée, toutes les règles de limitations fixées le cas échéant sont respectées.

12. Procédé selon la revendication 5 ou 6, **caractérisé en ce que** l'utilisateur sélectionne une zone de référence, qui comprend au moins une instruction (5) pour laquelle une pré-condition ou une règle de limitation fixée le cas échéant est enfreinte et l'environnement de développement intégré (2) génère, en tant que demande d'assistance pour l'utilisateur, au moins une proposition de correction pour le programme séquentiel (45), dont l'application mène au respect des pré-conditions et des règles de limitations fixées le cas échéant pour toutes les instructions (5) dans la zone de référence, la proposition de correction comprenant une ou plusieurs des opérations parmi l'insertion, la suppression et le déplacement de commandes (15), les modifications prévues à la suite de la proposition de correction étant représentées, en vue d'ensemble ou sous forme de résumé, à l'attention de l'utilisateur, par l'environnement de développement intégré (2) dans une prévisualisation et les modifications prévues étant apportées automatiquement au programme séquentiel (45) par l'environnement de développement intégré (2) après une confirmation par l'utilisateur.

13. Procédé selon la revendication 12, **caractérisé en ce que** deux propositions de correction ou plus sont déterminées, qui sont représentées à l'attention de l'utilisateur sur l'appareil de sortie pour la sélection pour la prévisualisation des modifications concernées, moyennant quoi, en outre, pour les propositions de correction, un coût est déterminé, qui est défini par le nombre et le type des modifications prévues, et le coût déterminé de chaque proposition de correction est représenté à l'attention de l'utilisateur et/ou la séquence de représentation des propositions de correction à sélectionner pour la prévisualisation a lieu en fonction du coût concerné.

14. Procédé selon l'une des revendications 1 à 13, **caractérisé en ce que** l'utilisateur sélectionne une zone de référence avec au moins un emplacement d'insertion possible pour des instructions (5) et sélectionne en outre une ou plusieurs commandes (15) dans une liste de sélection et l'environnement de développement intégré (2) génère, en tant que demande d'assistance, pour l'utilisateur, une proposition d'extension pour le programme séquentiel (45), dont l'application permet d'intégrer toutes les commandes sélectionnées en respectant les pré-conditions et les règles de limitations prévues le cas échéant dans le programme séquentiel existant, plus particulièrement dans la zone de référence, et les modifications prévues suite à la proposition d'extension sont représentées au moins en vue d'ensemble ou sous forme de résumé à l'attention de l'utilisateur dans une prévisualisation et les modifications prévues sont appliquées automatiquement au programme séquentiel (45) par l'environnement de développement intégré (2) après confirmation par l'utilisateur.

15. Procédé selon la revendication 14, **caractérisé en ce que** les commandes sélectionnées par l'utilisateur pour l'extension sont automatiquement complétées, par le l'environnement de développement intégré (2), par d'autres commandes (15) provenant du jeu d'instructions spécifiques à la machine (13), qui sont nécessaires pour le respect des pré-conditions et des règles de limitations prévues le cas échéant.

16. Procédé selon l'une des revendications 14 ou 15, **caractérisé en ce que** l'environnement de développement intégré (2) génère, en plus de la proposition d'extension, une ou plusieurs propositions d'extension alternatives, qui sont représentées à l'attention de l'utilisateur, pour la sélection pour la prévisualisation des extensions concernées sur l'appareil de sortie.

17. Procédé selon la revendication 16, **caractérisé en ce que**, pour chacune des propositions d'extension générées, l'environnement de développement intégré (2) détermine un coût, qui est défini par le nombre et le type des extensions prévues, et le coût déterminé pour chaque proposition d'extension est représenté à l'attention de l'utilisateur, la séquence de représentation des propositions d'extension pour la sélection pour la prévisualisation a lieu en fonction du coût concerné.

18. Procédé selon l'une des revendications 1 à 17, **caractérisé en ce que**, dans l'accord d'interface (12), est enregistré un jeu d'états de fonctionnement, mesurables pendant l'exécution du programme séquentiel (45) par la commande de la machine (21), plus particulièrement d'informations d'états, ou d'événements déclenchés.

19. Procédé selon l'une des revendications 1 à 18, **caractérisé en ce que** la formation et/ou l'actualisation de la base de connaissances d'états (46) a lieu en tenant compte des états et conditions d'états initiales, fixées le cas échéant et en tenant compte d'embranchements et de points de regroupement, existant le cas échéant, de chemins d'exécution conditionnés, alternatifs ou parallèles.

20. Procédé selon l'une des revendications 1 à 19, **caractérisé en ce que** la formation et/ou l'actualisation de la base de connaissances d'états (46) a lieu en tenant compte des conditions combinées avec les consignes conditionnées utilisées le cas échéant.

21. Dispositif de traitement de données comprenant un moyen de mémoire, un moyen d'exécution de code de programme et un appareil de sortie, **caractérisé en ce que** le dispositif de traitement de données est conçu pour l'exécution d'un procédé selon l'une des revendications 1 à 20.

22. Machine-outil comprenant un contrôle séquentiel basé sur l'état, **caractérisé en ce que** le contrôle séquentiel est conçu pour l'exécution d'un programme séquentiel, le programme séquentiel ayant été constitué selon un procédé selon les revendications 1 à 20.
